# EUROPEAN PATENT SPECIFICATION

(11) **EP 2 930 985 B1**
(45) Date of publication and mention of the grant of the patent: **11.08.2021**
(21) Application number: 15725224.8
(22) Date of filing: 06.02.2015
(51) Int. Cl.: H04W 60/00, H04W 48/16, H04W 60/04, H04W 36/00, H04W 48/14

(54) **PROVIDING A SERVICE IN MOBILE COMMUNICATION SYSTEM**
BEREITSTELLUNG EINES DIENSTES IN EINEM MOBILKOMMUNIKATIONSSYSTEM
FOURNITURE D'UN SERVICE DANS UN SYSTÈME DE COMMUNICATION MOBILE

(30) Priority: 07.02.2014 KR 20140014353; 06.03.2014 KR 20140026825; 18.06.2014 KR 20140074338
(43) Date of publication of application: 14.10.2015
(73) Proprietor: Samsung Electronics Co., Ltd., Suwon-si, Gyeonggi-do 443-742 (KR)
(72) Inventor: JEONG, Sang-Soo, Suwon-si Gyeonggi-do 442-847 (KR); KIM, Hye-Jeong, Suwon-si Gyeonggi-do 443-270 (KR); CHO, Song-Yean, Seoul 156-700 (KR)
(74) Representative: HGF
(86) International application number: PCT/KR2015/001238
(87) International publication number: WO 2015/119452

(56) References cited:
- WO-A1-2012/135994
- WO-A2-2013/052030
- KR-A- 20120 030 540
- KR-A- 20130 046 649
- KR-A- 20130 046 649
- US-A1- 2010 329 243
- US-A1- 2013 083 777
- US-A1- 2013 142 168
- US-A1- 2013 183 965
- US-A1- 2013 295 930
- US-A1- 2013 315 072
- US-A1- 2014 016 562
- ERICSSON: "CS domain and IM CN Subsystem selection principles", 3GPP DRAFT; S2-094178_CR-23221-DOMAIN-SELECTIONR_REV4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Tallinn; 20090515, 15 May 2009 (2009-05-15), XP050347113, [retrieved on 2009-05-15]
- "3rd Generation Partnership Project; Technical Specification Group Core Network and Terminals; Non-Access-Stratum (NAS) protocol for Evolved Packet System (EPS); Stage 3 (Release 12)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V12.3.0, 19 December 2013 (2013-12-19), pages 1-353, XP050729087, [retrieved on 2013-12-19]
- "3rd Generation Partnership Project; Technical Specification Group Services and System Aspects; Single Radio Voice Call Continuity (SRVCC); Stage 2 (Release 12)", 3GPP DRAFT; 23216-C00_FROM_BA0_CR_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 December 2013 (2013-12-16), XP050835179, Retrieved from the Internet: URL:http://www.3gpp.org/ftp/tsg_sa/WG2_Arc h/Latest_SA2_Specs/DRAFT_INTERIM/Archive/ [retrieved on 2013-12-16]
- "3rd Generation Partnership Project; Technical Specification Group Services and System Aspects; Feasibility Study of Single Radio Voice Call Continuity (SRVCC) from UTRAN/GERAN to E-UTRAN/HSPA; Stage 2 (Release 11)", 3GPP DRAFT; 23885-B00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725499, Retrieved from the Internet: URL:http://www.3gpp.org/ftp/tsg_sa/WG2_Arc h/Latest_SA2_Specs/Rel-11/ [retrieved on 2013-07-23]
- ERICSSON ET AL: "Serving nodes in case of rSRVCC", 3GPP DRAFT; S2-110847_WAS_S2-110555_RSRVCC_SGSN_MME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 26 February 2011 (2011-02-26), XP050524040, [retrieved on 2011-02-26]
- NSN ET AL: "On the need of HRL and SNA Access Information during UE Radio Capability Match", 3GPP DRAFT; R3-131397 ON THE NEED OF HRL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Barcelona, Spain; 20130819 - 20130823 9 August 2013 (2013-08-09), XP050719516, Retrieved from the Internet: URL:http://www.3gpp.org/ftp/tsg_ran/WG3_Iu /TSGR3_81/Docs/ [retrieved on 2013-08-09]
- None

## Description

### TECHNICAL FIELD

The present disclosure relates to user equipments and methods for providing a service by adaptively selecting an access network from which voice service and data service will be received in a mobile communication system.

### BACKGROUND

In general, mobile communication systems were developed to provide voice service, ensuring the mobility of users. The mobile communication systems have been extending their service ranges to data service in addition to the voice service. Now the mobile communication systems are capable of providing various high-speed large-capacity services to User Equipments (UEs).

Major examples of the mobile communication systems include a Long Term Evolution (LTE) mobile communication system, an LTE-Advanced (LTE-A) mobile communication system, a High Speed Downlink Packet Access (HSDPA) mobile communication system, a High Speed Uplink Packet Access (HSUPA) mobile communication system, a 3^{rd} Generation Partnership Project 2 (3GPP2) High Rate Packet Data (HRPD) mobile communication system, a 3GPP2 Wideband Code Division Multiple Access (WCDMA) mobile communication system, a 3GPP2 Code Division Multiple Access (CDMA) mobile communication system, an Institute of Electrical and Electronics Engineers (IEEE) 802.16m communication system, an Evolved Packet System (EPS), and a Mobile Internet Protocol (Mobile IP) system. However, current mobile communication systems face lack of resources and users demand higher-speed services. Therefore, a more advanced mobile communication is required.

To satisfy the demands, the LTE mobile communication system is under development as a future-generation mobile communication system. The LTE mobile communication system seeks high-speed packet communication at a transmission rate of, for example, up to 100Mbs. To achieve high-speed packet communication in the LTE mobile communication system, many techniques have been discussed. The techniques include, for example, reduction of the number of nodes in a communication path by simplifying the structure of a network and approximation of radio protocols as close to radio channels as possible.

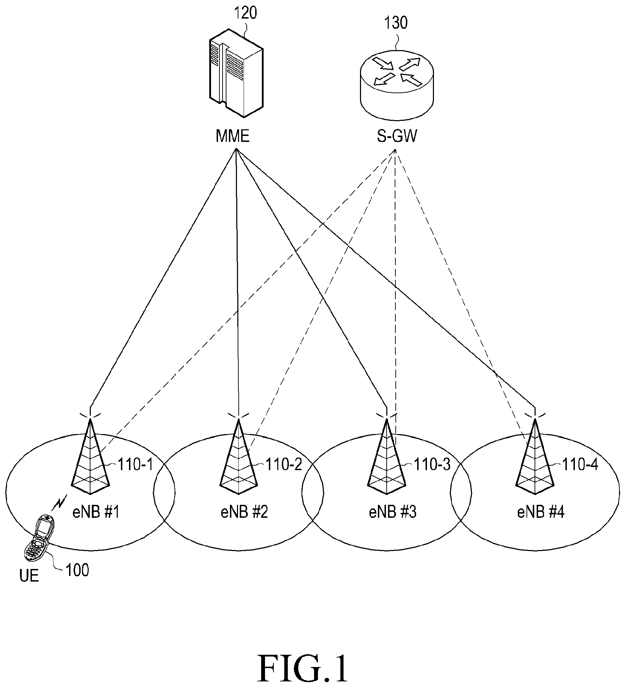

With reference to FIG. 1, the configuration of a general LTE mobile communication system will be described below.

FIG. 1 illustrates the configuration of a general LTE mobile communication system.

Referring to FIG. 1, the LTE mobile communication system may include a UE 100, a plurality of evolved Node Bs (eNBs), for example, eNB #1 110-1, eNB #2 110-2, eNB #3 110-3, and eNB #4 110-4, a Mobility Management Entity (MME) 120, and a Serving GateWay (S-GW) 130.

The UE 100 is connected to an external network through eNB #1 110-1, eNB #2 110-2, eNB #3 110-3, and eNB #4 110-4, the S-GW 130, and a Packet Data Network (PDN) GateWay (P-GW).

Each of eNB #1 110-1, eNB #2 110-2, eNB #3 110-3, and eNB #4 110-4 is a Radio Access Network (RAN) node that corresponds to a Radio Network Controller (RNC) in a Universal Mobile Telecommunications System (UMTS) Terrestrial Radio Access Network (UTRAN) system and a Base Station Controller (BSC) in a Global System for Mobile communications (GSM)/Enhanced Data rates for GSM Evolution (EDGE) Radio Access Network (GERAN) system. Herein, eNB #1 110-1, eNB #2 110-2, eNB #3 110-3, and eNB #4 110-4 are connected to the UE 100 through radio channels and play a similar role to a legacy RNC/BSC. Each of eNB #1 110-1, eNB #2 110-2, eNB #3 110-3, and eNB #4 110-4 may use a plurality of cells simultaneously.

Since all user traffic including a real-time service such as Voice over IP (VoIP) service is transmitted on a shared channel in the LTE mobile communication system, a device that performs scheduling by collecting state information about UEs is needed and this device may be an eNB.

The MME 120 is an entity that executes various control functions. One MME may be connected to a plurality of eNBs.

The S-GW 130 provides data bearers. The S-GW 130 generates or removes data bearers under the control of the MME 120.

In addition to the MME 120 and the S-GW 130, a Core Network (CN) of the LTE mobile communication system may include other nodes such as an Application Function (AF) entity, a Policy Charging and Rules Function (PCRF) entity, and a P-GW (not shown in FIG. 1).

The AF entity exchanges application-related information with a UE at an application level.

The PCRF entity controls a polity related to Quality of Service (QoS) of a user. The PCRF entity transmits a Policy and Charging Control (PCC) rule corresponding to the policy to the P-GW, for application to the P-GW. The PCRF entity controls overall QoS and charging for traffic.

In general, UP refers to a path running from the UE 100 that transmits/receives user data to/from RAN nodes, that is, eNB #1 110-1, eNB #2 110-2, eNB #3 110-3, and eNB #4 110-4, to the S-GW 130 and then to the P-GW. In the path, paths between the UE 100 and eNB #1 110-1, eNB #2 110-2, eNB #3 110-3, and eNB #4 110-4 use radio channels to which resources are severely restricted.

In a wireless communication system such as the LTE mobile communication system, QoS is applicable on an EPS bearer basis. One EPS bearer is used to transmit IP flows having the same QoS requirement. QoS-related parameters may be configured in the EPS bearer, including a QoS Class Identifier (QCI) and an Allocation and Retention Priority (ARP). The QCI is a parameter indicating a QoS priority defined as an integer value, and the ARP is a parameter used to determine whether to allow or reject creation of a new EPS bearer.

The EPS bearer corresponds to a Packet Data Protocol (PDP) context in a GPRS system. One EPS bearer belongs to a PDN connection which may have an Access Point Name (APN) as an attribute. When a PDN connection is created for an IP Multimedia Subsystem (IMS) service such as Voice over LTE (VoLTE), the PDN connection should be created using a well-known IMS APN.

To support voice calls, an LTE network may use IMS-based VoLTE in a Packet Switched (PS) manner or by Circuit Switched Fall Back (CSFB) reusing a Circuit Switched (CS) scheme of a 2^{nd} Generation/3^{rd} Generation (2G/3G) system. In the LTE network, VoLTE and Voice over IMS (VoIMS) are interchangeably used in the same meaning.

Upon generation of an incoming voice call or an outgoing voice call while a UE is using a network in a wireless communication system, particularly the LTE network in the LTE mobile communication system, a CSFB procedure for switching to a CS network is performed for the voice service. In general, a 2G/3G mobile communication system is a CS network that may provide CS service and an entity responsible for CS service-related control is referred to as a Mobile Switching Center (MSC) or a Visitor Location Register (VLS). The CSFB procedure that provides a switching function for the CS service is performed through an SGs interface between an MSC/VLR and an MME in the LTE mobile communication system.

If the UE moves out of the coverage area of VoIMS service during receiving the VoIMS service, the UE may be switched to a network supporting CS by Single Radio Voice Call Continuity (SRVCC) in order to maintain the call. If the SRVCC is applied while the UE is receiving the VoIMS service and data service at the same, the data service is also provided to the UE through a 2G/3G network. Because the 2G/3G network generally has a lower transmission rate for the data service than the LTE network, the quality of the data service provided to the UE may be degraded.

KR 2013 0046649 A relates to a system and method for continuing voice call in a wireless communication system. A voice call service device of a mobile communication system and a method thereof are provided to prevent disconnection of a voice call when an SRVCC (Single Radio Voice Call Continuity) source RAT and a destination RAT are not supported in UE (User Equipment). When an SRVCC source RAT and a target RAT are not supported in UE, E-UTRAN/UTRAN/GERAN transmits an Attach/TAU/RAU accept including IMSVoPS indicator=1 to the UE (235). When the SRVCC source RAT and the target RAT are not supported in the UE, the E-UTRAN/UTRAN/GERAN transmits the Attach/TAU/RAU accept including the IMSVoPS indicator=1 to the UE (227). The UE receives the Attach/TAU/RAU accept. When an IMSVoPS indicator value is 1, the E-UTRAN uses an IMS (Internet Protocol Multimedia Subsystem) voice call.

US 2013/295930 A1 relates to mobile communication devices and methods for handling a combined attach or routing area update procedure successful for PS domain services only. A communication device is provided with a wireless module and a controller module. The wireless module performs wireless transceiving to and from a service network. The controller module performs a combined attach or RAU procedure by transmitting an attach or RAU request message to the service network via the wireless module, and receives an attach or RAU accept message for the combined attach or RAU procedure, which includes a reject cause for CS domain services, from the service network via the wireless module. Also, the controller module prohibits retrying the combined attach or RAU procedure to obtain the CS domain services, in response to the attach or RAU accept message including the reject cause for the CS domain services.

### SUMMARY

An aim of certain embodiments of the present disclosure is to provide an apparatus and method for providing a service in a mobile communication system.

Another aim of certain embodiments of the present disclosure is to provide an apparatus and method for providing a service by adaptively selecting an access network from which voice service and data service will be received in a mobile communication system.

Another aim of certain embodiments of the present disclosure is to provide an apparatus and method for providing a service by differentiating an access network from which a User Equipment (UE) will receive voice service from an access network from which the UE will receive data service in a mobile communication system.

In accordance with a first aspect of the invention, there is provided a user equipment, UE, for providing a service in a mobile communication system according to claim 1.

In accordance with a second aspect of the invention, there is provided a user equipment, UE, for providing a service in a mobile communication system according to claim 4

In accordance with a third aspect of the invention, there is provided a method for providing a service at a user equipment, UE, in a mobile communication system according to claim 8.

In accordance with a fourth aspect of the invention, there is provided a method for providing a service at a user equipment, UE, in a mobile communication system according to claim 9.

Other aspects, advantages, and salient features of the disclosure will become apparent to those skilled in the art from the following detailed description, which, taken in conjunction with the annexed drawings, discloses exemplary embodiments of the disclosure.

### BRIEF DESCRIPTION OF THE DRAWINGS

The above and other aspects, features and advantages of certain exemplary embodiments of the present disclosure will be more apparent from the following description taken in conjunction with the accompanying drawings, in which:
FIG. 1 illustrates the configuration of a general Long Term Evolution (LTE) mobile communication system;
FIG. 2 illustrates the configuration of an operator network supporting a plurality of voice service support schemes according to an embodiment of the present disclosure;
FIG. 3 is a flowchart illustrating an operation for determining a registration procedure type according to whether voice service is supported in a network by a Long Term Evolution (LTE) Packet Switched (PS) legacy Circuit Switched (CS) User Equipment (UE) in a mobile communication system according to an embodiment of the present disclosure;
FIG. 4 is a flowchart illustrating an operation for determining whether to notify a network of 2^{nd} Generation/3^{rd} Generation (2G/3G) capability according to whether Single Radio Voice Call Continuity (SRVCC) is needed by an LTE PS legacy CS UE in a mobile communication system according to an embodiment of the present disclosure;
FIG. 5 is a diagram illustrating a signal flow for an exemplary operation for performing a Tracking Area Update (TAU) procedure again after an SRVCC procedure and a DTM HO procedure by an LTE PS legacy CS UE in a mobile communication system according to an embodiment of the present disclosure;
FIG. 6 is a diagram illustrating a signal flow for another exemplary operation for performing a TAU procedure again after an SRVCC procedure and a Dual Transfer Mode (DTM) Handover (HO) procedure by an LTE PS legacy CS UE in a mobile communication system according to an embodiment of the present disclosure;
FIG. 7 is a diagram illustrating a signal flow for an exemplary operation for performing a TAU procedure again after an SRVCC procedure without a DTM HO procedure by an LTE PS legacy CS UE in a mobile communication system according to an embodiment of the present disclosure;
FIG. 8 is a diagram illustrating a signal flow for another exemplary operation for performing a TAU procedure again after an SRVCC procedure without a DTM HO procedure by an LTE PS legacy CS UE in a mobile communication system according to an embodiment of the present disclosure;
FIG. 9 is a flowchart illustrating an operation of an LTE PS legacy CS UE based on the type of a legacy network coexistent with an LTE network in a mobile communication system according to an embodiment of the present disclosure;
FIG. 10 is a flowchart illustrating an operation for controlling a TAU request message based on a timer by a UE in a mobile communication system according to an embodiment of the present disclosure;
FIG. 11 is a flowchart illustrating an operation for controlling transmission of a TAU request message according to a Radio Resource Control (RRC) connected state by a UE in a mobile communication system according to an embodiment of the present disclosure;
FIG. 12 is a flowchart illustrating an operation for performing an RRC connection reestablishment procedure and controlling transmission of a TAU request message according to a result of the RRC connection reestablishment procedure by a UE in a mobile communication system according to an embodiment of the present disclosure;
FIG. 13 is a block diagram of an LTE PS legacy CS UE in a mobile communication system according to an embodiment of the present disclosure;
FIG. 14 is a block diagram of an evolved Node B (eNB) in a mobile communication system according to an embodiment of the present disclosure;
FIG. 15 is a block diagram of a Mobility Management Entity (MME) in a mobile communication system according to an embodiment of the present disclosure;
FIG. 16 is a block diagram of a Serving GPRS Support Node (SGSN) in a mobile communication system according to an embodiment of the present disclosure; and
FIG. 17 is a block diagram of a Base Station Controller (BSC) in a mobile communication system according to an embodiment of the present disclosure.

Throughout the drawings, like reference numerals will be understood to refer to like parts, components, and structures.

### DETAILED DESCRIPTION

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

An embodiment of the present disclosure provides an apparatus and method for providing a service in a mobile communication system.

An embodiment of the present disclosure provides an apparatus and method for providing a service by adaptively selecting an access network from which to receive voice service and data service in a mobile communication system.

An embodiment of the present disclosure provides an apparatus and method for providing a service by differentiating an access network from which a UE will receive voice service from an access network from which the UE will receive data service in a mobile communication system.

The methods and apparatuses according to the embodiments of the present disclosure are applicable to various mobile communication systems such as a Long Term Evolution (LTE) mobile communication system, an LTE-Advanced (LTE-A) mobile communication system, a High Speed Downlink Packet Access (HSDPA) mobile communication system, a High Speed Uplink Packet Access (HSUPA) mobile communication system, a 3^{rd} Generation Partnership Project 2 (3GPP2) High Rate Packet Data (HRPD) mobile communication system, a 3GPP2 Wideband Code Division Multiple Access (WCDMA) mobile communication system, a 3GPP2 Code Division Multiple Access (CDMA) mobile communication system, an Institute of Electrical and Electronics Engineers (IEEE) 802.16m communication system, an Evolved Packet System (EPS), and a Mobile Internet Protocol (Mobile IP) system.

The embodiments of the present disclosure will be described below with the appreciation that an LTE mobile communication system is a non-legacy mobile communication system and a 2^{nd} Generation/3^{rd} Generation (2G/3G) mobile communication system is a legacy mobile communication system. However, those skilled in the art will understand that many other mobile communication systems than the LTE mobile communication system may be non-legacy mobile communication systems and many other mobile communication systems than the 2G/3G mobile communication system may be legacy mobile communication systems.

The embodiments of the present disclosure will be described in detail in the context of a Circuit Switched Fall Back (CSFB) scheme in which a User Equipment (UE) switches from an LTE network to a Voice over Internet Multimedia Subsystem (VoIMS) or Circuit Switched (CS) network, for voice service. However, those skilled in the art will understand that the subject matter of the present disclosure is applicable to other communication systems or services having similar technological backgrounds through slight modifications without departing from the scope of the present disclosure.

In the present disclosure and the drawings, the terms LTE network and Evolved Universal Mobile Telecommunications System (UMTS) Terrestrial Radio Access Network (E-UTRAN) may be interchangeably used in the same meaning. A CS network may be a UTRAN, a Global System for Mobile communications (GSM)/Enhanced Data rates for GSM Evolution (EDGE) Radio Access Network (GERAN) network, a Code Division Multiple Access 2000 (CDMA2000) network, or a similar network, which is capable of supporting CS service. These networks may be generically called legacy networks. The legacy networks may further include a Time Division Synchronous Code Division Multiple Access (TD-SCDMA) network. The TD-SCDMA network may generally be classified as a 3G network.

In the present disclosure and the drawings, when it is said that a UE exists in a network, this may cover both a case in which the UE is connected to the network and a case in which the UE is camped on the network in idle state. The term Base Station (BS) corresponds to evolved Node B (eNB), if the network is an E-UTRAN.

In the present disclosure and the drawings, a Home Subscriber Server (HSS) may be an entity that is identical to a Home Location Register (HLR) or physically coexistent with the HLR.

In the present disclosure and the drawings, Dual Transfer Mode (DTM) HandOver (HO) and Packet Switched (PS) HO may be used in the same meaning.

Since an LTE network does not support the CS service, the LTE network may adopt the CSFB scheme using a 2G/3G CS network, when a specific service is required. In the CSFB scheme, an SGs interface is used for exchanging information between a Mobility Management Entity (MME) and a Mobile Switching Center (MSC). Some MSCs of an operator network may have difficulty in using an SGs interface.

In this case, an operator supporting the LTE network and the 2G/3G network at the same time allows a UE to directly monitor control signals of the LTE network and the 2G/3G CS network, rather than the operator supports switching to the CS network for the UE like the CSFB scheme, in order to support a specific service such as voice service that the LTE network does not directly provide. In other words, the UE transmits/receives control signals to/from the 2G/3G mobile communication system at every predetermined interval to perform a Mobility Management (MM) procedure of the CS network, while receiving data service mainly through the LTE mobile communication system.

For the convenience of description, a scheme in which a UE receives PS service through a non-legacy mobile communication system and CS service through a legacy mobile communication system will be referred to as a 'non-legacy PS legacy CS scheme'. For example, since the non-legacy mobile communication system is an LTE mobile communication system in the embodiments of the present disclosure, the non-legacy PS legacy CS scheme may also be called an 'LTE PS legacy CS scheme'.

If the LTE PS legacy CS scheme is supported, a UE may operate in the following operation modes.
(1) Operation mode 1: operation mode supporting LTE PS service (including Voice over IP Multimedia Subsystem (IMS) (VoIMS) service).
(2) Operation mode 2: operation mode supporting the LTE PS service (including the VoIMS service) and 2G/3G CS service.
(3) Operation mode 3: operation mode supporting 2G/3G PS service and the 2G/3G CS service.

Only when the LTE mobile communication system has a function of supporting the VoIMS service and is configured to use the function, the VoIMS service can be supported.

Likewise, the CSFB scheme is available only when the LTE mobile communication system and a 2G/3G mobile communication system coexistent with the LTE mobile communication system support the CSFB scheme.

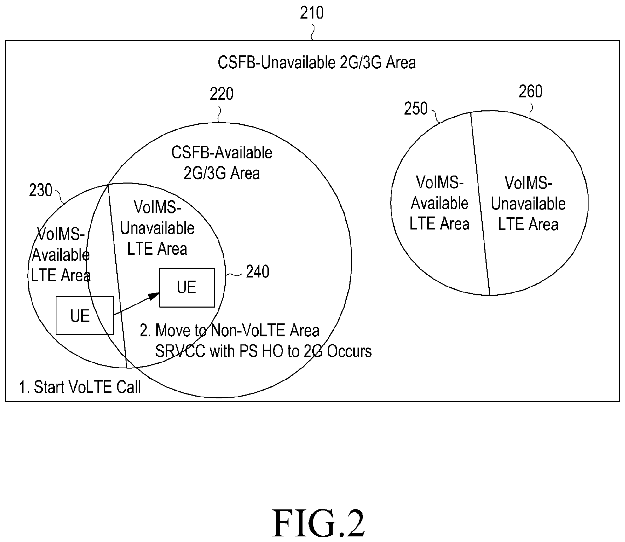

A specific operator network may support a plurality of voice service support schemes. The structure of a specific operator network supporting a plurality of voice service support schemes will be described below with reference to FIG. 2.

FIG. 2 illustrates a structure of an operator network supporting a plurality of voice service support schemes according to an embodiment of the present disclosure.

Referring to FIG. 2, the operator network includes a plurality of areas, for example, six areas, which are area #1 210, area #2 220, area #3 230, area #4 240, area #5 250, and area #6 260.

Area #1 210 is a CSFB-unavailable 2G/3G legacy area. The CSFB-unavailable 2G/3G legacy area is a 2G/3G area in which CSFB is not available.

Area #2 220 is a CSFB-available 2G/3G legacy area. The CSFB-available 2G/3G legacy area is a 2G/3G area in which CSFB is available.

Area #3 230 and area #5 250 are VoLTE-available LTE areas. The VoLTE-available LTE areas are LTE areas in which VoLTE service is available.

Area #4 240 and area #6 260 are VoLTE-unavailable LTE areas. The VoLTE-unavailable LTE areas are LTE areas in which the VoLTE service is not available.

When a UE enters an LTE area, the UE should perform an attach procedure or a Tracking Area Update (TAU) procedure.

However, a UE supporting an LTE PS legacy CS scheme may not have prior knowledge as to whether a current domain providing voice service in the LTE area of an operator network is a PS domain (that is, the VoIMS service is used) or a CS domain. Even though the voice service is provided in the CS domain in the LTE area, the UE using the LTE PS legacy CS scheme may not determine whether it can access a CS network based on the CSFB scheme. For the convenience of description, a UE supporting the LTE PS legacy CS scheme will be referred to as an 'LTE PS legacy CS UE'.

To solve the above problem, when the LTE PS legacy CS UE enters an LTE area and thus starts an attach procedure or a TAU procedure, the LTE PS legacy CS UE performs a combined attach procedure or a combined TAU procedure in order to check a voice service function supported by the operator network. Then, the LTE PS legacy CS UE may detect a supported function of the operator network by receiving a response message from the operator network. Thus, when needed, the LTE PS legacy CS UE may perform an additional TAU procedure to operate in LTE PS legacy CS mode using the LTE PS legacy CS scheme.

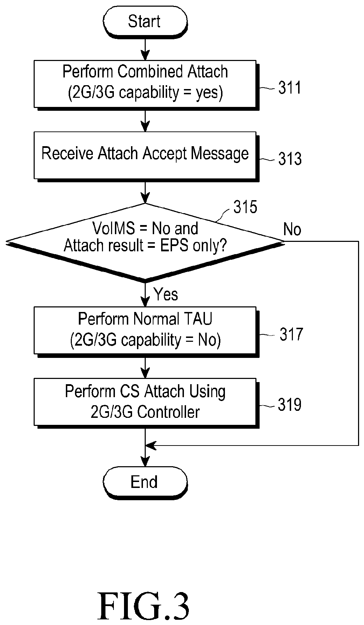

With reference to FIG. 3, a description will be given of an operation of an LTE PS legacy CS UE for determining a registration procedure type according to whether a network supports voice service in a mobile communication system according to an embodiment of the present disclosure.

FIG. 3 is a flowchart illustrating an operation of an LTE PS legacy CS UE for determining a registration procedure type according to the type of a voice service supported by a network in a mobile communication system according to an embodiment of the present disclosure.

Referring to FIG. 3, when the LTE PS legacy CS UE detects its entry into an LTE area, the LTE PS legacy CS UE performs a combined attach procedure in operation 311 and proceeds to operation 313. The combined attach procedure of the LTE PS legacy CS UE will be described below in detail.

For example, the LTE PS legacy CS UE may transmit a message indicating that it supports a 2G/3G scheme and a CSFB/Single Radio Voice Call Continuity (SRVCC) procedure to an evolved Node B (eNB) during a Radio Resource Control (RRC) connection establishment procedure or a subsequent procedure for transmitting UE radio capability information. In another example, the LTE PS legacy CS UE may transmit to a Mobility Management Entity (MME) an attach request message including information indicating that it supports the 2G/3G scheme and the CSFB/SRVCC procedure. It is assumed herein that an LTE PS legacy CS UE transmits to an MME an attach request message including information indicating that it supports a 2G/3G scheme and a CSFB/SRVCC procedure. The information indicating support of the 2G/3G scheme and the CSFB/SRVCC procedure may be represented, for example, as '2G/3G capability = yes'.

As the combined attach procedure is performed, the LTE PS legacy CS UE receives an attach accept message from the MME in operation 313 and goes to operation 315. The attach accept message may include various parameters. The LTE PS legacy CS UE may determine a voice service support function supported by the network based on the parameters included in the attach accept message. An operation of the LTE PS legacy CS UE for determining a voice service support function supported by the network will be described below in detail.

The parameters set in the attach accept message may include, for example, EPS network feature support information and an EPS attach result Information Element (IE). The EPS network feature support information may include an IMS VoPS field which may be configured, for example, in 1 bit. If the IMS VoPS field is set to, for example, '1' in the EPS network feature support information, this implies that the EPS network feature support information indicates support of VoIMS service in the LTE network. On the other hand, if the IMS VoPS field is set to, for example, '0' in the EPS network feature support information, this implies that the EPS network feature support information indicates non-support of the VoIMS service in the LTE network. If the EPS attach result IE is set to Combined EPS/IMSI, this means that the LTE network supports CSFB. On the other hand, if the EPS attach result IE is set to EPS only, this means that the LTE network does not support CSFB.

As described above, the LTE PS legacy CS UE may determine whether the LTE network supports VoIMS or CSFB based on the parameters included in the attach accept message. Accordingly, the LTE PS legacy CS UE may receive voice service using VoIMS or CSFB.

In operation 315, the LTE PS legacy CS UE checks whether the LTE network does not support either of the VoIMS service and the CSFB scheme (VoIMS = No and Attach result = EPS only?) based on the parameters included in the attach accept message. If it is determined as a result of the check that the LTE network does not support either of the VoIMS service and the CSFB scheme, the LTE PS legacy CS UE proceeds to operation 317 to continuously use LTE PS. In this case, if voice centric is set and none of VoIMS and CSFB are supported, a general UE turns off an LTE function (i.e., a function of accessing an E-UTRAN) and may access only a 2G/3G network.

In operation 317, the LTE PS legacy CS UE performs a normal TAU procedure and goes to operation 319. The normal TAU means that a TAU is not a combined-type TAU. The normal TAU procedure will be described below in detail.

If the LTE network supports none of VoIMS and CSFB, the LTE PS legacy CS UE should operate in LTE PS legacy CS mode. For example, if a VoLTE-unavailable LTE area and a CSFB-unavailable 2G/3G area are overlapped as described before with reference to FIG. 2, the LTE network may support none of VoIMS and CSFB. In other words, the LTE PS legacy CS UE should perform an operation for receiving the CS service through the 2G/3G network, while receiving the PS service through the LTE network.

However, since the LTE PS legacy CS UE has already notified the eNB of support of the 2G/3G functionality during the combined attach procedure in operation 311, if the LTE network switches the LTE PS legacy CS UE to the 2G/3G network or performs HO of the LTE PS legacy CS UE to the 2G/3G network, the LTE PS legacy CS UE may not use the LTE network any longer.

On the other hand, if the LTE PS legacy CS UE operates in the LTE PS legacy CS mode, the LTE PS legacy CS UE does not need to accept a command requesting switch or HO to the 2G/3G network through the LTE network because it can access the 2G/3G network. Therefore, as the LTE network supports none of VoIMS and CSFB, if the LTE PS legacy CS UE should operate in the LTE PS legacy CS mode, it performs the normal TAU procedure. In the normal TAU procedure, the LTE PS legacy CS UE sets an EPS update type IE to TA updating (EPS update type IE = TA updating) in a TAU request message. In addition, the LTE PS legacy CS UE should not include information indicating that it has 2G/3G capability or supports CSFB/SRVCC (2G/3G capability = no) in the TAU request message in the normal TAU procedure. Consequently, the LTE PS legacy CS UE may prevent the LTE network from switching or handing over the LTE PS legacy CS UE to the 2G/3G network by performing the normal TAU procedure.

After the normal TAU procedure, the LTE PS legacy CS UE performs a CS registration procedure through its 2G/3G controller in operation 319. The CS registration procedure is performed to receive the CS service through the 2G/3G network. For example, the CS registration procedure includes, for example, an attach procedure or a location area update procedure. The attach procedure through the LTE network and the registration procedure through the 2G/3G network may be performed in a reverse order or in parallel.

While it has been described with reference to FIG. 3 by way of example that the LTE PS legacy CS UE performs an initial combined attach procedure in the LTE network, an operation for determining a registration procedure type according to whether the network supports voice service by the LTE PS legacy CS UE may be performed without any great modification even when the LTE PS legacy CS UE performs a combined TAU procedure after an attach procedure in the mobile communication system according to the embodiment of the present disclosure described before with reference to FIG. 3. In this case, in regard to messages transmitted by the LTE PS legacy CS UE, the attach request message may be replaced with a TAU request message and the EPS update type IE may be replaced with combined TA/LA updating.

While FIG. 3 illustrates an operation for determining a registration procedure type according to whether a network supports voice service by an LTE PS legacy CS UE in the mobile communication system according to the embodiment of the present disclosure, many modifications can be made to FIG. 3. For example, although the operations are sequential in FIG. 3, the operations may be overlapped, parallel, or performed in a changed order. Or the operations may be performed a plurality of times.

Even though a UE is an LTE PS legacy CS UE supporting the LTE PS legacy CS scheme, if the UE is configured to support SRVCC in a VoIMS-available LTE area, the LTE PS legacy CS UE may be capable of notifying the LTE network that it has 2G/3G capability and supports SRVCC. If the LTE PS legacy CS UE does not notify the LTE network that it has 2G/3G capability, when the LTE PS legacy CS UE moves out of the VoIMS-available LTE area during receiving the VoIMS service, SRVCC is not supported for the LTE PS legacy CS UE, thereby disconnecting a call.

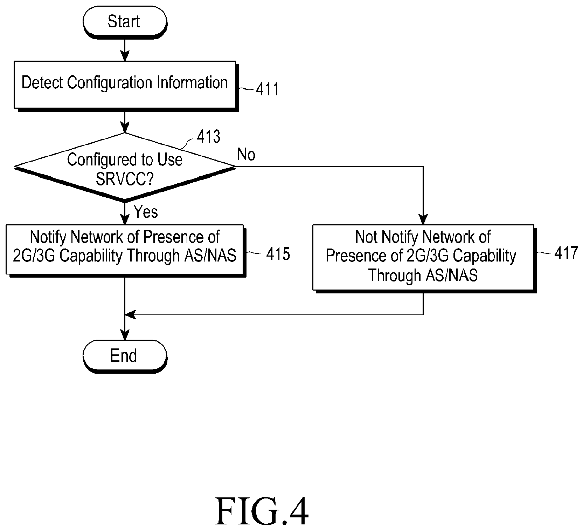

In this context, an operation for determining whether to notify a network of 2G/3G capability according to whether SRVCC is needed by an LTE PS legacy CS UE in a mobile communication system according to an embodiment of the present disclosure will be described below with reference to FIG. 4.

FIG. 4 is a diagram illustrating a signal flow for an operation for determining whether to notify a network of 2G/3G capability according to whether SRVCC is needed by an LTE PS legacy CS UE in a mobile communication system according to an embodiment of the present disclosure.

Referring to FIG. 4, the LTE PS legacy CS UE detects its configuration information in operation 411 and checks whether it has been configured to use SRVCC in operation 413. If the LTE PS legacy CS UE has been configured to use SRVCC, the LTE PS legacy CS UE proceeds to operation 415.

In operation 415, the LTE PS legacy CS UE notifies the network that the LTE PS legacy CS UE has 2G/3G capability by transmitting its capability information to an Access Server (AS) or a Network Access Server (NAS). The reason for notifying the network that the LTE PS legacy CS UE has the 2G/3G capability by transmitting the capability information is to activate SRVCC HO of the LTE PS legacy CS UE to a 2G/3G network. The capability information about the LTE PS legacy CS UE may be transmitted, for example, in a message.

If the LTE PS legacy CS UE has not been configured to use SRVCC in operation 413, the LTE PS legacy CS UE does not notify the network that it has the 2G/3G capability through the AS or NAS in operation 417. In other words, the LTE PS legacy CS UE does not transmit its capability information to the network. The reason for not transmitting the capability information to the network is to prevent SRVCC HO of the LTE PS legacy CS UE to the 2G/3G network.

While FIG. 4 illustrates an operation for determining whether to notify a network of 2G/3G capability according to whether SRVCC is needed by an LTE PS legacy CS UE in a mobile communication system according to the embodiment of the present disclosure, many modifications can be made to FIG. 4. For example, although the operations are sequential in FIG. 4, the operations may be overlapped, parallel, or performed in a changed order. Or the operations may be performed a plurality of times.

When the LTE PS legacy CS UE moves from a VoLTE-available area to a VoLTE-unavailable area during receiving VoLTE service, the network may use SRVCC to prevent voice call disconnection. If the LTE PS legacy CS UE is capable of transmitting/receiving PS service data, the LTE network may perform PS HO along with SRVCC. If the LTE PS legacy CS UE performs PS HO to the 2G/3G network, the PS data service quality of the 2G/3G network may be lower than that of the LTE network. Since the LTE PS legacy CS UE supports the LTE PS legacy CS scheme, the LTE PS legacy CS UE may transmit/receive PS service data in the LTE network in spite of the SRVCC HO of a voice call to the CS network.

Therefore, in the case where SRVCC is performed, a user of the LTE PS legacy CS UE may experience a much higher PS service quality if an action is taken to transmit/receive PS service data again to/from the LTE network after the PS HO.

In other words, upon receipt of a PS HO command along with an SRVCC execution command, the LTE PS legacy CS UE switches its operation mode to LTE PS legacy CS mode after a PS HO procedure and performs a TAU procedure again through an LTE controller of the LTE PS legacy CS UE. The TAU procedure may be the afore-described normal TAU procedure. Upon receipt of a TAU request message from the LTE PS legacy CS UE, a Core Network (CN) enables the LTE PS legacy CS UE to transmit/receive PS service data through the LTE network by setting a path for PS service data to the LTE network.

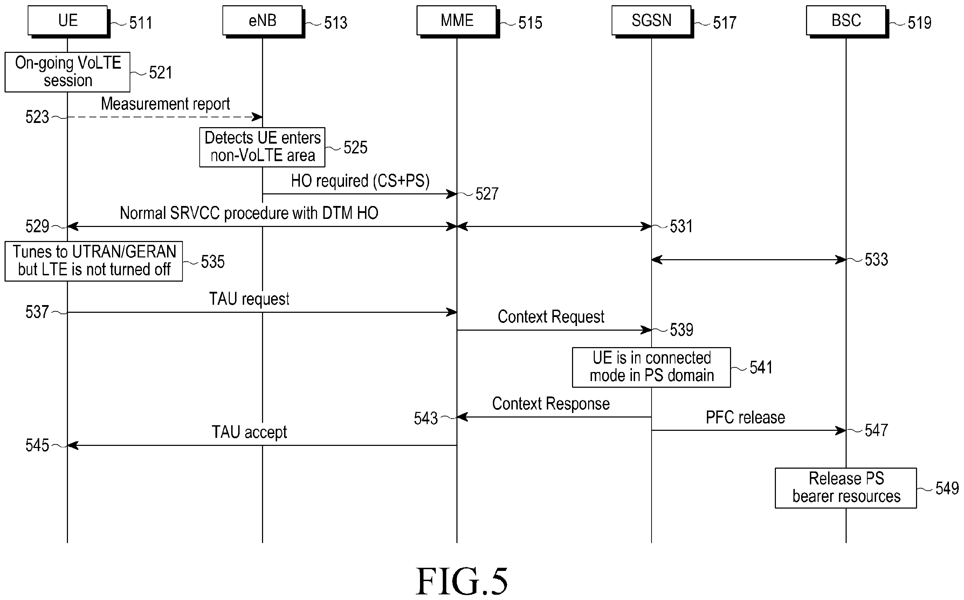

With reference to FIG. 5, an exemplary operation for performing a TAU procedure again after an SRVCC procedure and a Dual Transfer Mode (DTM) HO procedure by an LTE PS legacy CS UE in a mobile communication system according to an embodiment of the present disclosure will be described below.

FIG. 5 is a diagram illustrating a signal flow for an exemplary operation for performing a TAU procedure again after an SRVCC procedure and a DTM HO procedure by an LTE PS legacy CS UE in a mobile communication system according to an embodiment of the present disclosure.

Referring to FIG. 5, the mobile communication system includes a UE 511, an eNB 513, an MME 515, a Serving General Packet Radio Service (GPRS) Support Node (SGSN) 517, and a Base Station Controller (BSC) 519. It is assumed that the UE 511 is an LTE PS legacy CS UE and the terms UE and LTE PS legacy CS UE are interchangeably used in FIG. 5.

With an on-going VoLTE session established in operation 521, the LTE PS legacy CS UE 511 transmits a measurement report message to the eNB 513 in every predetermined period or upon generation of an event in operation 523. Meanwhile, if the physical location of the LTE PS legacy CS UE 511 is changed or the LTE PS legacy CS UE 511 moves to a VoLTE-unavailable LTE area due to a change in a received signal strength, the eNB 513 detects that the LTE PS legacy CS UE 511 has entered the VoLTE-unavailable LTE area in operation 525. For the convenience of description, the VoLTE-unavailable LTE area will be referred to as a 'non-VoLTE area'. Upon detection that the LTE PS legacy CS UE 511 has entered the non-VoLTE area, the eNB 513 may determine that it should start an SRVCC procedure for the LTE PS legacy CS UE 511.

When determining to start the SRVCC procedure, the eNB 513 may notify the MME 515 that a PS HO (or DTM HO) procedure is required along with the SRVCC procedure by transmitting an HO required message (Ho required (CS+PS)) in operation 527. That is, the eNB 513 may indicate to the MME 515 that the SRVCC procedure and the PS HO procedure are required for the LTE PS legacy CS UE 511 by transmitting the HO required message to the MME 515. A voice call of the LTE PS legacy CS UE 511 may be handed over to a CS domain by the SRVCC procedure and an EPS bearer (referred to shortly as a bearer) being used in the LTE network may be handed over to a PS domain of the 2G/3G network, based on operation 527.

Upon receipt of the HO required message from the eNB 513, the MME 515 performs a normal SRVCC procedure with DTM HO with the LTE PS legacy CS UE 511 in operation 529. That is, upon receipt of a DTM HO command along with an SRVCC command from the MME 515, the LTE PS legacy CS UE 511 performs an SRVCC procedure with DTM HO. While it has been described by way of example that the MME 515 performs the DTM HO procedure with the LTE PS legacy CS UE 511, the MME 515 may perform a PS HO procedure with the LTE PS legacy CS UE 511 in another example. Further, the MME 515 performs the normal SRVCC procedure with DTM HO (or PS HO) with the SGSN 517 in operation 531 and the SGSN 517 performs a normal SRVCC procedure with DTM HO (or PS HO) with the BSC 519 in operation 533.

As described before, if the EPS bearer is handed over to the 2G/3G network, the LTE PS legacy CS UE 511 should use a 2G/3G PS network. That is, the LTE PS legacy CS UE 511 should use the 2G/3G network, although it can transmit/receive PS service data through the LTE network simultaneously with continuous reception of voice service through a CS network.

Accordingly, upon completion of the SRVCC procedure with DTM HO (or PS HO), the LTE PS legacy CS UE 511 may operate in the LTE PS legacy CS mode in order to increase a user-experienced service quality. In other words, the LTE PS legacy CS UE 511 performs a TAU procedure with the LTE network through an LTE transmitter/receiver and an LTE controller of the LTE PS legacy CS UE 511, while receiving the CS service through a 2G/3G transmitter/receiver and a 2G/3G controller of the LTE PS legacy CS UE 511 in operation 535. That is, the LTE PS legacy CS UE 511 switches to a UTRAN/GERAN but does not turn off LTE-related modules such as the LTE transmitter/receiver and the LTE controller.

Thus, the LTE PS legacy CS UE 511 transmits a TAU request message to the MME 515 in operation 537. The TAU procedure may be the afore-described normal TAU procedure. Upon receipt of the TAU request message from the LTE PS legacy CS UE 511, the MME 515 may detect the SGSN 517 to which the LTE PS legacy CS UE 511 has been connected in the 2G/3G network by PS HO, based on an ID included in the received TAU request message. The MME 515 transmits a context request message to the detected SGSN 517 in operation 539.

If the LTE PS legacy CS UE 511 transmits the TAU request message to the LTE network within a relatively short time or a predetermined time after the PS HO to the 2G/3G network, the SGSN 517 may receive the context request message from the MME 511 even though the SGSN 517 determines that the LTE PS legacy CS UE 511 is still connected to the 2G/3G PS network. Nonetheless, the SGSN 517 transmits a context response message to the MME 515 in response to the context request message without rejecting to respond to the context request message or processing the context request message as an error in operation 543. Upon receipt of the context request message from the MME 515, the SGSN 517 determines that the LTE PS legacy CS UE 511 is in connected mode in the PS domain in operation 541.

Upon receipt of the context response message from the SGSN 517, the MME 515 activates the EPS bearer again to the LTE network and switches a data path to the LTE network by a TAU procedure so that the LTE PS legacy CS UE 511 may transmit/receive PS service data to/from the LTE network. That is, after receiving the context response message from the SGSN 517, the MME 515 transmits a TAU accept message to the LTE PS legacy CS UE 511 in operation 545 and thus the LTE PS legacy CS UE 511 may transmit/receive PS service data through the LTE network.

Having transmitted the context response message to the MME 515, that is, having determined that the LTE PS legacy CS UE 511 has not transmitted/received PS service data in the 2G/3G network, the SGSN 517 transmits a Packet Flow Context (PFC) release message commanding release of all PS contexts, that is, all PFCs to the BSC 519 in operation 547. Upon receipt of the PFC release message from the SGSN 517, the BSC 519 releases the PS contexts, that is, the PFCs in operation 549. That is, the BSC 519 releases PS bearer resources.

While FIG. 5 illustrates an exemplary operation for performing a TAU procedure again after an SRVCC procedure with DTM HO by an LTE PS legacy CS UE in a mobile communication system according to the embodiment of the present disclosure, many modifications can be made to FIG. 5. For example, although the operations are sequential in FIG. 5, the operations may be overlapped, parallel, or performed in a changed order. Or the operations may be performed a plurality of times.

In the embodiment of the present disclosure illustrated in FIG. 5, even though an SGSN determines that an LTE PS legacy CS UE is connected to a PS domain in a 2G/3G network, the SGSN accepts a context request message received from an MME so that PS service may be provided through an LTE network. If the SGSN rejects to respond to the context request message in the situation, the MME may not complete a TAU procedure. In this case, the MME may transmit information indicating retry of an attach procedure, while indicating failure of the TAU procedure to the LTE PS legacy CS UE. By this operation, the LTE PS legacy CS UE may perform the attach procedure again without unnecessary TAU or Public Land Mobile Network (PLMN) reselection. Consequently, a time taken to resume PS service data transmission/reception can be shortened.

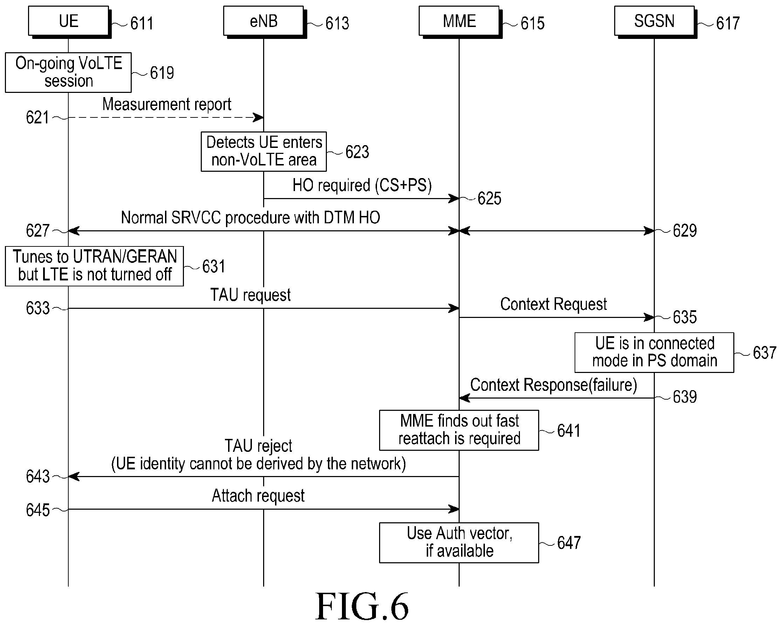

Now, a description will be given of another exemplary operation for a TAU procedure again after an SRVCC procedure with DTM HO by an LTE PS legacy CS UE in a mobile communication system according to an embodiment of the present disclosure with reference to FIG. 6.

FIG. 6 is a diagram illustrating a signal flow for another exemplary operation for a TAU procedure again after an SRVCC procedure with DTM HO by an LTE PS legacy CS UE in a mobile communication system according to an embodiment of the present disclosure.

Referring to FIG. 6, the mobile communication system includes a UE 611, an eNB 613, an MME 615, and an SGSN 617. It is assumed that the UE 511 is an LTE PS legacy CS UE and the terms UE and LTE PS legacy CS UE are interchangeably used in FIG. 6.

With an on-going VoLTE session established in operation 619, the LTE PS legacy CS UE 611 transmits a measurement report message to the eNB 613 in every predetermined period or upon generation of an event in operation 621. Meanwhile, if the physical location of the LTE PS legacy CS UE 511 is changed or the LTE PS legacy CS UE 611 moves to a non-VoLTE area due to a change in a received signal strength, the eNB 613 detects that the LTE PS legacy CS UE 611 has entered the non-VoLTE area in operation 623. Upon detection that the LTE PS legacy CS UE 611 has entered the non-VoLTE area, the eNB 613 may determine that it should start an SRVCC procedure for the LTE PS legacy CS UE 611.

When determining to start the SRVCC procedure, the eNB 613 may notify the MME 615 that a PS HO (or DTM HO) procedure is required along with the SRVCC procedure by transmitting an HO required message (Ho required (CS+PS)) in operation 625. That is, the eNB 613 may indicate to the MME 615 that the SRVCC procedure and a PS HO procedure are required for the LTE PS legacy CS UE 611 by transmitting the HO required message to the MME 615. A voice call of the LTE PS legacy CS UE 611 may be handed over to a CS domain by the SRVCC procedure and an EPS bearer being used in the LTE network may be handed over to a PS domain of the 2G/3G network, based on operation 625.

Upon receipt of the HO required message from the eNB 613, the MME 615 performs a normal SRVCC procedure with DTM HO with the LTE PS legacy CS UE 611 in operation 627. That is, upon receipt of a DTM HO command along with an SRVCC command from the MME 615, the LTE PS legacy CS UE 611 performs the SRVCC procedure with DTM HO. While it has been described by way of example that the MME 615 performs the DTM HO procedure with the LTE PS legacy CS UE 611, the MME 615 may perform the PS HO procedure with the LTE PS legacy CS UE 611 in another example. Further, the MME 615 performs the normal SRVCC procedure with DTM HO (or PS HO) with the SGSN 617 in operation 629.

As described above, if the EPS bearer is handed over to the 2G/3G network, the LTE PS legacy CS UE 611 should use the 2G/3G PS network. That is, the LTE PS legacy CS UE 611 should use the 2G/3G network, although it can transmit/receive PS service data through the LTE network simultaneously with continuous reception of voice service through a CS network.

Accordingly, upon completion of the SRVCC procedure with DTM HO (or PS HO), the LTE PS legacy CS UE 611 may operate in LTE PS legacy CS mode in order to increase a user-experienced service quality. In other words, the LTE PS legacy CS UE 611 performs a TAU procedure with the LTE network through its LTE transmitter/receiver and LTE controller, while receiving the CS service through its 2G/3G transmitter/receiver and 2G/3G controller in operation 631. That is, the LTE PS legacy CS UE 611 switches to a UTRAN/GERAN but does not turn off LTE-related modules such as the LTE transmitter/receiver and the LTE controller.

Thus, the LTE PS legacy CS UE 611 transmits a TAU request message to the MME 615 in operation 633. Upon receipt of the TAU request message from the LTE PS legacy CS UE 611, the MME 615 may detect the SGSN 617 to which the LTE PS legacy CS UE 611 has been connected in the 2G/3G network by PS HO, based on an ID included in the received TAU request message. The MME 615 transmits a context request message to the detected SGSN 617 in operation 635.

If the LTE PS legacy CS UE 611 transmits the TAU request message to the LTE network within a relatively short time or a predetermined time after the PS HO to the 2G/3G network, the SGSN 617 may receive the context request message from the MME 511 even though the SGSN 617 determines that the LTE PS legacy CS UE 611 is still connected to the 2G/3G PS network.

In this case, if the SGSN 617 determines that the LTE PS legacy CS UE 611 is connected to the 2G/3G network, the SGSN 617 may reject to respond to the context request message, determining that an error has occurred. Then, the SGSN 617 transmits a context response message indicating rejection to respond to the context request message to the MME 615 in operation 639. The context response message includes a cause for the failure of responding to the context request message. The cause may explicitly indicate that the UE is in connected state to the 2G/3G PS network or may simply indicate rejection of the request of the MME 615.

Upon receipt of the context response message from the SGSN 617, the MME 615 determines that the LTE PS legacy CS UE 611 needs fast reattachment in order to prevent time consumption involved in retry of an unnecessary TAU procedure or selection of another Radio Access Technology (RAT) or PLMN by the LTE PS legacy UE 611 in operation 641 .

Determining that reattachment of the LTE PS legacy CS UE 611 is required, the MME 615 transmits a TAU reject message to the LTE PS legacy CS UE 611 so that the LTE PS legacy CS UE 511 may perform a reattach procedure in operation 643. Cause information set in the TAU reject message indicates that the reattach procedure is required. That is, the cause information included in the TAU reject message may be set to 'UE identity cannot be derived by the network'. The 'UE identity cannot be derived by the network' means that the network cannot identify the UE.

Upon receipt of the TAU reject message including the cause information set to 'UE identity cannot be derived by the network' from the MME 615, the LTE PS legacy CS UE 611 determines that it has failed in the TAU procedure and needs to retry the attach procedure. Therefore, the LTE PS legacy CS UE 611 performs the attach procedure again by transmitting an attach request message to the MME 615 in operation 645.

Upon receipt of the attach request message from the LTE PS legacy CS UE 611, the MME 615 may perform the attach procedure fast by omitting interaction with an HSS (not shown in FIG. 6), using an unused authentication vector stored for the LTE PS legacy CS UE 611 if available in operation 647.

While FIG. 6 illustrates another exemplary operation for performing a TAU procedure again after an SRVCC procedure with DTM HO by an LTE PS legacy CS UE in a mobile communication system according to the embodiment of the present disclosure, many modifications can be made to FIG. 6. For example, although the operations are sequential in FIG. 6, the operations may be overlapped, parallel, or performed in a changed order. Or the operations may be performed a plurality of times.

In the embodiment of the present disclosure, if an eNB determines that an SRVCC procedure is needed because an LTE PS legacy CS UE has not yet moved out of an LTE area but just moved to a non-VoLTE area, the eNB does not perform a PS HO procedure. If the PS HO procedure is not performed when the SRVCC procedure starts, an MME suspends PS bearers. If the LTE PS legacy CS UE switches to a 2G/3G network and thus does not perform a Routing Area Update (RAU) procedure, a PS bearer context of the LTE PS legacy CS UE is transmitted to an SGSN or is not deleted in the MME. When the LTE PS legacy CS UE performs a TAU procedure with the LTE network in this state, the MME may activate an EPS bearer again to the LTE network without interacting with the SGSN. The TAU procedure may be the afore-described normal TAU procedure.

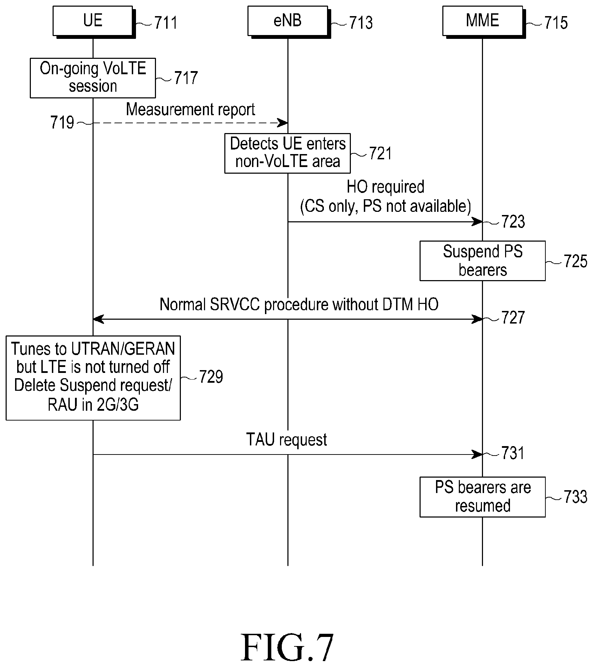

With reference to FIG. 7, an exemplary operation for performing a TAU procedure again after an SRVCC procedure without DTM HO by an LTE PS legacy CS UE in a mobile communication system according to an embodiment of the present disclosure will be described below.

FIG. 7 is a diagram illustrating a signal flow for an exemplary operation for performing a TAU procedure again after an SRVCC procedure without DTM HO by an LTE PS legacy CS UE in a mobile communication system according to an embodiment of the present disclosure.

Referring to FIG. 7, the mobile communication system includes a UE 711, an eNB 713, and an MME 715. It is assumed that the UE 711 is an LTE PS legacy CS UE and the terms UE and LTE PS legacy CS UE are interchangeably used in FIG. 7. With an on-going VoLTE session established in operation 717, the LTE PS legacy CS UE 711 transmits a measurement report message to the eNB 713 in every predetermined period or upon generation of an event in operation 719. Meanwhile, if the physical location of the LTE PS legacy CS UE 711 is changed or the LTE PS legacy CS UE 711 moves to a non-VoLTE area due to a change in a received signal strength, the eNB 713 detects that the LTE PS legacy CS UE 711 has entered the non-VoLTE area in operation 721.

Upon detection that the LTE PS legacy CS UE 711 has entered the non-VoLTE area, the eNB 713 may determine that it should start an SRVCC procedure for the LTE PS legacy CS UE 711. When determining to start the SRVCC procedure, the eNB 713 determines whether there is a non-VoLTE area around the LTE PS legacy CS UE 711. In the presence of a non-VoLTE area around the LTE PS legacy CS UE 711, the eNB 713 performs only an SRVCC procedure without PS HO (or DTM HO) even though a 2G/3G cell to which the LTE PS legacy CS UE 711 will switch by the SRVCC procedure supports PS HO or DTM HO. In other words, the eNB 713 transmits an HO required message including an indication indicating that a CS-only HO procedure needs to be performed and PS service is not available to the LTE PS legacy CS UE 711 in a target cell (HO required (CS only, PS not available)) in operation 723.

Upon receipt of the HO required message from the eNB 713, the MME 715 performs an SRVCC procedure, while suspending PS bearers in operation 725. Subsequently, a normal SRVCC procedure without DTM HO is performed among the LTS PS legacy CS UE 711, the eNB 713, and the MME 715 in operation 727. Consequently, the LTE PS legacy CS UE 711 may not transmit a suspend request message and a Routing Area (RA) update request message which are supposed to be transmitted in the 2G/3G network.

After the SRVCC procedure, the LTE PS legacy CS UE 711 may switch its operation mode to LTE PS legacy CS mode and perform a TAU procedure using its LTE controller and LTE transmitter/receiver in operation 729. Thus, the LTE PS legacy CS UE 711 transmits a TAU request message to the MME 715 in operation 731. The TAU procedure may be the afore-described normal TAU procedure.

Upon receipt of the TAU request message from the LTE PS legacy CS UE 711, the MME 715 reactivates the suspended EPS bearers in operation 733

While FIG. 7 illustrates an exemplary operation for performing a TAU procedure again after only an SRVCC procedure without DTM HO by an LTE PS legacy CS UE in a mobile communication system according to the embodiment of the present disclosure, many modifications can be made to FIG. 7. For example, although the operations are sequential in FIG. 7, the operations may be overlapped, parallel, or performed in a changed order. Or the operations may be performed a plurality of times.

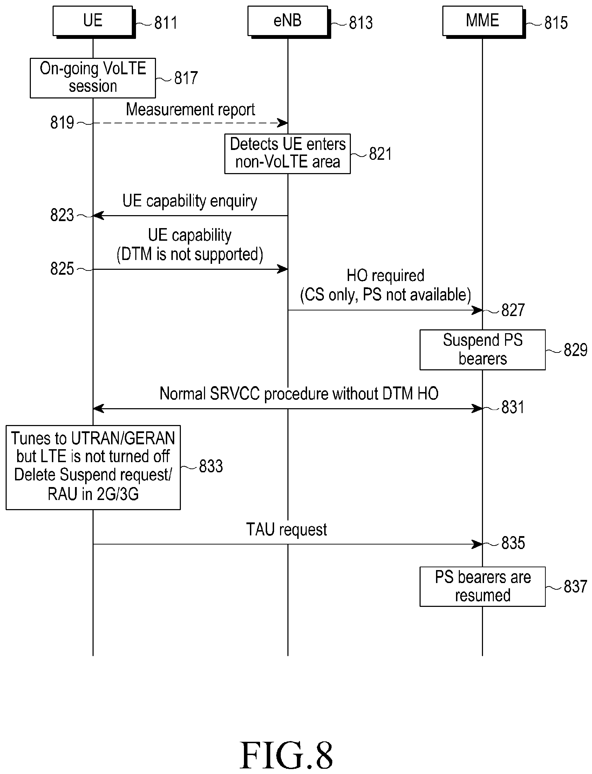

In the embodiment of the present disclosure illustrated in FIG. 7, it has been described that after an SRVCC procedure without DTM HO, an LTE PS legacy CS UE performs a TAU procedure again. Now, another exemplary operation for performing a TAU procedure again after only an SRVCC procedure without DTM HO by an LTE PS legacy CS UE in a mobile communication system according to the embodiment of the present disclosure will be described below with reference to FIG. 8.

FIG. 8 is a diagram illustrating a signal flow for another exemplary operation for performing a TAU procedure again after an SRVCC procedure without DTM HO by an LTE PS legacy CS UE in a mobile communication system according to an embodiment of the present disclosure.

Referring to FIG. 8, the mobile communication system includes a UE 811, an eNB 813, and an MME 815. It is assumed that the UE 811 is an LTE PS legacy CS UE and the terms UE and LTE PS legacy CS UE are interchangeably used in FIG. 8.

With an on-going VoLTE session established in operation 817, the LTE PS legacy CS UE 811 transmits a measurement report message to the eNB 813 in every predetermined period or upon generation of an event in operation 819. Meanwhile, if the physical location of the LTE PS legacy CS UE 811 is changed or the LTE PS legacy CS UE 811 moves to a non-VoLTE area due to a change in a received signal strength, the eNB 813 detects that the LTE PS legacy CS UE 811 has entered the non-VoLTE area in operation 821.

Upon detection that the LTE PS legacy CS UE 811 has entered the non-VoLTE area, the eNB 813 may determine that it should start an SRVCC procedure for the LTE PS legacy CS UE 811. Then, the eNB 813 determines whether there is a non-VoLTE area around the LTE PS legacy CS UE 811. In the presence of a non-VoLTE area around the LTE PS legacy CS UE 811, the eNB 813 transmits a UE radio capability enquiry message to the LTE PS legacy CS UE 811. That is, the eNB 813 requests the LTE PS legacy CS UE 811 to transmit information about the radio capability of the LTE PS legacy CS UE 811 by transmitting the UE radio capability enquiry message in operation 823.

Upon receipt of the UE radio capability enquiry message from the eNB 813, the LTE PS legacy CS UE 811 transmits a UE capability information message to the eNB 813 in response to the UE radio capability enquiry message in operation 825. The UE capability information message includes information indicating that the LTE PS legacy CS UE 811 does not support DTM HO or PS HO to a UTRAN/GERAN (UE capability (DTM is not supported)).

Upon receipt of the UE capability information message from the LTE PS legacy CS UE 811, the eNB 813 performs only an SRVCC procedure without PS HO (or DTM HO) even though a 2G/3G cell to which the LTE PS legacy CS UE 811 will switch by the SRVCC procedure supports PS HO or DTM HO. In other words, the eNB 813 transmits an HO required message including an indication indicating that a CS-only HO procedure needs to be performed and PS service is not available to the LTE PS legacy CS UE 811 in a target cell (HO required (CS only, PS not available)) in operation 827.

Upon receipt of the HO required message from the eNB 813, the MME 815 performs an SRVCC procedure, while suspending PS bearers in operation 829. Subsequently, an SRVCC procedure is performed among the LTS PS legacy CS UE 811, the eNB 813, and the MME 815 in operation 831. Consequently, the LTE PS legacy CS UE 811 may not transmit a suspend request message and an RA update request message which are supposed to be transmitted in the 2G/3G network.

After the SRVCC procedure, the LTE PS legacy CS UE 811 may switch its operation mode to LTE PS legacy CS mode and perform a TAU procedure using its LTE controller and LTE transmitter/receiver in operation 833. Thus, the LTE PS legacy CS UE 811 transmits a TAU request message to the MME 815 in operation 835.

Upon receipt of the TAU request message from the LTE PS legacy CS UE 811, the MME 815 reactivates the suspended EPS bearers in operation 837

While FIG. 8 illustrates another exemplary operation for performing a TAU procedure again after only an SRVCC procedure without DTM HO by an LTE PS legacy CS UE in a mobile communication system according to the embodiment of the present disclosure, many modifications can be made to FIG. 8. For example, although the operations are sequential in FIG. 8, the operations may be overlapped, parallel, or performed in a changed order. Or the operations may be performed a plurality of times.

In the mobile communication system according to the embodiment of the present disclosure illustrated in FIG. 8, as a modification to the operation for performing a TAU procedure again after only an SRVCC procedure without DTM HO by an LTE PS legacy CS UE, if the LTE PS legacy CS UE with an active VoLTE session established determines that it approaches an LTE TA not included in a Tracking Area Identifier (TAI) list stored in the LTE PS legacy CS UE by a measurement report message, the LTE PS legacy CS UE may perform a TAU procedure by changing information indicating whether DTM HO or PS HO is performed among information about UE radio capability to non-support of DTM HO or PS HO. Upon receipt of the modified information about UE capability by the TAU procedure, an LTE network may not perform an SRVCC procedure and a DTM HO or PS HO procedure simultaneously based on the received information about UE radio capability, when the SRVCC procedure occurs.

As described above, if an operator network does not support either of VoIMS and CSFB, a UE may operate in LTE PS legacy CS mode.

On the other hand, if a legacy network coexistent with an LTE network is a 2G network, data service is not available to the UE. Even if the data service is available, it is preferred to transmit PS data through the LTE network instead of the 2G network having a relatively low service quality. However, if the legacy network coexistent with the LTE network is a 3G network, both data service and CS service are available to the UE through the 3G network. The UE may determine whether the network supports VoIMS or CSFB by a combined attach procedure or a combined TAU procedure. If the network does not support either of VoIMS and CSFB and neighbor information provided by the LTE network in which the UE is currently performing an attach procedure or a TAU procedure indicates the presence of only a 2G legacy network around the UE or the UE is aware in any other method that only a 2G legacy network is available, the UE should operate in the LTE PS legacy CS mode, as described before. If the UE is aware that a 3G legacy network is available around the UE, the UE may transmit even PS data through the 3G legacy network.

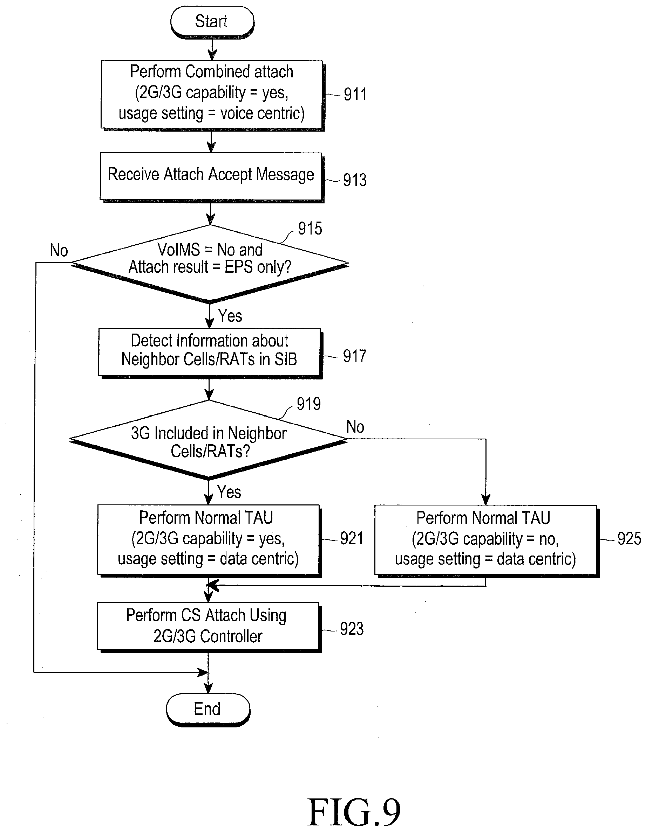

With reference to FIG. 9, an operation of an LTE PS legacy CS UE based on the type of a legacy network coexistent with an LTE network in a mobile communication system according to an embodiment of the present disclosure will be described below.

FIG. 9 is a flowchart illustrating an operation of an LTE PS legacy CS UE based on the type of a legacy network coexistent with an LTE network in a mobile communication system according to an embodiment of the present disclosure.

Referring to FIG. 9, upon detection of entry into an LTE area, an LTE PS legacy CS UE performs a combined attach procedure in operation 911 and proceeds to operation 913. A detailed description will be given of the combined attach procedure of the LTE PS legacy CS UE.

For example, the LTE PS legacy CS UE may transmit a message indicating that it supports a 2G/3G scheme and a CSFB/SRVCC procedure to an eNB in an RRC connection establishment procedure or a subsequent procedure for transmitting UE radio capability information. In another example, the LTE PS legacy CS UE may transmit to an MME an attach request message including information indicating that it supports the 2G/3G scheme and the CSFB/SRVCC procedure. The following description is given on the assumption that an LTE PS legacy CS UE may transmit to an MME an attach request message including information indicating that it supports a 2G/3G scheme and a CSFB/SRVCC procedure. The information indicating support of the 2G/3G scheme and the CSFB/SVRCC procedure may be represented, for example, as '2G/3G capability = yes'. Further, the LTE PS legacy CS UE may include information indicating that its usage setting is voice centric in the attach request message.

As the combined attach procedure is performed, the LTE PS legacy CS UE receives an attach accept message in operation 913 and then goes to operation 915. The attach accept message may include various parameters. The LTE PS legacy CS UE may determine a voice service support function supported by a network based on the parameters included in the attach accept message, as follows.

The parameters included in the attach accept message may include EPS network feature support information and an EPS attach result IE. The EPS network feature support information may include an IMS VoPS field, which may be represented, for example, in 1 bit. If the IMS VoPS field is set to '1' in the EPS network feature support information, the EPS network feature information indicates that the LTE network supports VoIMS. On the contrary, if the IMS VoPS field is set to '0' in the EPS network feature support information, the EPS network feature information indicates that the LTE network does not support VoIMS. If the EPS attach result IE is set to Combined EPS/IMI, this means that the LTE network supports CSFB. On the contrary, if the EPS attach result IE is set to EPS only, this means that the LTE network does not support CSFB.

In this manner, the LTE PS legacy CS UE may determine whether the LTE network supports VoIMS or CSFB based on the parameters included in the attach accept message and accordingly may receive voice service in VoIMS or CSFB.

In operation 915, the LTE PS legacy CS UE determines whether the LTE network supports none of VoIMS and CSFB based on the parameters included in the attach accept message according to the usage setting (VoIMS = No and Attach result = EPS Only?). If determining that the LTE network supports none of VoIMS and CSFB, the LTE PS legacy CS UE proceeds to operation 917. If information related to the usage setting of the LTE PS legacy CS UE is set to voice centric and the LTE network does not support either of VoIMS and CSFB, the LTE PS legacy CS UE may turn off the LTE function, that is, the function of accessing an E-UTRAN and may access only the 2G/3G network. However, in the embodiment of the present disclosure illustrated in FIG. 9, the LTE PS legacy CS UE proceeds to operation 917.

In operation 917, the LTE PS legacy CS UE detects information about neighbor cells and RATs using a System Information Block (SIB) received from an eNB and goes to operation 919. Or while not shown in FIG. 9, the UE may detect information about neighbor cells and RATs in any other method. In operation 919, the LTE PS legacy CS UE may determine whether the type of a legacy network adjacent to or coexistent with the current LTE network is a 2G (for example, a GERAN) network or a 3G (for example, a UTRAN or TD-SCDMA) network. If the type of the legacy network coexistent with the current LTE network is a 2G network, the LTE PS legacy CS UE should operate in LTE PS legacy CS mode. For this purpose, the LTE PS legacy CS UE performs a normal TAU procedure in operation 925 and then goes to operation 923. The normal TAU procedure means that the TAU procedure is not a combined-type TAU procedure. Now the normal TAU procedure will be described below in detail.

If the LTE network does not support either of VoIMS and CSFB, the LTE PS legacy CS UE should operate in the LTE PS legacy CS mode. For example, as illustrated in FIG. 2, if a non-VoLTE area overlaps with a CSFB-unavailable 2G area, the LTE network does not support either of VoIMS and CSFB. That is, the LTE PS legacy CS UE should receive CS service through the 2G network, while receiving PS service through the LTE network.

However, since the LTE PS legacy CS UE has already notified the eNB that it supports 2G/3G capability during the combined attach procedure in operation 911, if the LTE network switches or hands over the LTE PS legacy CS UE to the 2G/3G network, the LTE PS legacy CS UE may not use the LTE network any longer.

If the LTE PS legacy CS UE operates in the LTE PS legacy CS mode, the LTE PS legacy CS UE may access the 2G/3G network and thus there is no need for accepting a command indicating switching or HO to the 2G/3G network through the LTE network.

Therefore, since the LTE network supports none of VoIMS and CSFB, the LTE PS legacy CS UE performs the normal TAU procedure if it has to operate in the LTE PS legacy CS mode. In this case, the LTE PS legacy CS UE sets an EPS update type IE to 'TA updating' (EPS update type IE = TA updating) in a TAU request message during the normal TAU procedure. In addition, the LTE PS legacy CS UE should not include information indicating support of 2G/3G capability or CSFB/SRVCC in the TAU request message (2G/3G capability = no) in the normal TAU procedure. The LTE PS legacy CS UE should also indicate that its usage setting is data centric to the network by the TAU request message. Thus, the LTE PS legacy CS UE may prevent the LTE network from switching or handing over the LTE PS legacy CS UE to the 2G/3G network by the above normal TAU procedure.

After the normal TAU procedure, the LTE PS legacy CS UE performs a CS registration procedure using its 2G/3G controller in operation 923. The CS registration procedure is performed to provide the CS service through the 2G/3G network, involving, for example, an attach procedure or a location area update procedure. The attach procedure of the LTE network and the registration procedure of the 2G/3G network may be performed in a reverse order or in parallel.

On the other hand, if the type of the legacy network coexistent with the LTE network is a 3G network in operation 919, the LTE PS legacy CS UE may simultaneously receive voice (CS) service and PS data service through the 3G network instead of the afore-described LTE PS legacy CS mode. For this purpose, the LTE PS legacy CS UE performs the normal TAU procedure in operation 921 and then goes to operation 923. The normal TAU procedure means that the TAU procedure is not a combined-type TAU procedure. Now the normal TAU procedure will be described below in detail.

If the LTE network does not support either of VoIMS and CSFB and the LTE PS legacy CS UE starts a voice call, the LTE PS legacy CS UE should perform an operation for receiving the CS service and the PS service through the 3G network. For example, as illustrated in FIG. 2, if a non-VoLTE area overlaps with a CSFB-unavailable 2G area, the LTE network does not support either of VoIMS and CSFB.

However, since the LTE PS legacy CS UE has already notified the eNB that its usage setting is voice centric during the combined attach procedure in operation 911, the LTE PS legacy CS UE may not prevent the network from configuring the LTE PS legacy CS UE to use the 2G or 3G network instead of the LTE network.

Therefore, if the LTE PS legacy CS UE is aware that the LTE network supports none of VoIMS and CSFB and an adjacent/coexistent legacy network is a 3G network, the LTE PS legacy CS UE performs the normal TAU procedure. In this case, the LTE PS legacy CS UE sets the EPS update type UE to 'TA updating' (EPS update type IE = TA updating) in the TAU request message during the normal TAU procedure. In addition, the LTE PS legacy CS UE may indicate support of 2G/3G capability to the network in the TAU request message (2G/3G = yes) in the normal TAU procedure. The LTE PS legacy CS UE should also indicate that its usage setting is data centric to the network by the TAU request message. Thus, the LTE PS legacy CS UE may prevent the LTE network from switching or handing over the LTE PS legacy CS UE to the 2G/3G network by the above normal TAU procedure.

After the normal TAU procedure, the LTE PS legacy CS UE performs the CS registration procedure using its 2G/3G controller in operation 923. The CS registration procedure is performed to provide the CS service through the 2G/3G network, involving, for example, an attach procedure or a location area update procedure. The attach procedure of the LTE network and the registration procedure of the 2G/3G network may be performed in a reverse order or in parallel.

While it has been described with reference to FIG. 9 that an LTE PS legacy CS UE performs an initial combined attach procedure in an LTE network, the operation for determining a registration procedure type according to whether a network supports voice service by an LTE PS legacy CS UE in a mobile communication system according to the embodiment of the present disclosure illustrated in FIG. 9 may be applied without any great modification even though the UE performs a combined TAU procedure after an attach procedure. In this case, the LTE PS legacy CS UE may change an attach request message to a TAU request message instead of and an PES update type IE to combined TA/LA updating in FIG. 9.

In the embodiment of FIG. 9 and other related embodiments, an LTE PS legacy CS UE performs a different operation according to a cell adjacent to or coexistent with an LTE network. Therefore, when a voice call starts later, an operation of the LTE PS legacy CS UE should be different depending on whether an adjacent cell is included in a 2G network or a 3G network.

If the type of the adjacent/coexistent cell is a 2G cell, the LTE PS legacy CS UE, which having been aware of the start of the voice call, should operate in the afore-described LTE PS legacy CS mode. For example, when the LTE PS legacy CS UE requests an outgoing call or receives information indicating generation of an incoming call, for example, a paging message from the network, the LTE PS legacy CS UE is aware that a voice call has started.

Therefore, the LTE PS legacy CS UE performs a voice call setup operation with the 2G network through the 2G/3G controller, while still performing an operation for receiving the PS service through the LTE network.

On the other hand, if the type of the adjacent/coexistent cell is a 3G cell, the LTE PS legacy CS UE aware of the start of the voice call may receive PS data service simultaneously with reception of voice service by CS through the 3G network.

Therefore, the LTE PS legacy CS UE may request CS call setup through the 2G/3G controller and perform an RAU procedure. When the LTE PS legacy CS UE transmits an RAU request message through the 3G network, an SGSN changes a PS data transmission path from the LTE network to the 3G network. Subsequently, the LTE PS legacy CS UE may transmit and receive PS data through the 3G network. Herein, a similar situation to those illustrated in FIGS. 5 and 6 may occur. That is, the SGSN of the 3G network may request a context to an MME even though the LTE PS legacy CS UE is in connected mode in the LTE network.

To prevent this situation, the SGSN and the MME may exchange their roles in operations 539, 541, 543, and 547 of FIG. 5 or operations 635, 637, 639, and 641 of FIG. 6.

In an embodiment of the present disclosure, determining whether the type of a cell is a 2G or 3G cell means determining whether 2G RAT or 3G RAT is applied to the cell.

While FIG. 9 illustrates an operation of an LTE PS legacy CS UE according to the type of a legacy network coexistent with an LTE network in a mobile communication system according to an embodiment of the present disclosure, many modifications can be made to FIG. 9. For example, while the operations are sequential in FIG. 9, they may be overlapped or may be performed in parallel, in a different order, or a plurality of times.

If the UE transmits a TAU request message to the LTE network to receive data service during HO to the legacy network due to generation of the SRVCC procedure, the SRVCC procedure may be canceled in view of the TAU procedure, which will be described below in detail.

Only when the MME receives an SRVCC PS to CS Complete Notification (or Ack) message from an MSC during the SRVCC procedure, the MME may be aware that the UE has successfully performed HO to the legacy network. However, if the MME receives the TAU request message from the UE before receiving the SRVCC PS to CS Complete Notification message from the MSC, the MME determines that the HO of the UE to the legacy network has failed. Therefore, the MME may transmit an SRVCC PS to CS Cancel Notification message to the MSC in order to cancel the SRVCC procedure.

Accordingly, an embodiment of the present disclosure provides methods for avoiding the above situation, that is, first, second, and third methods, which will be described below.

In the first method, if a UE performs HO to a legacy network by SRVCC, a TAU procedure performed for the UE to continuously receive data service in an LTE network is delayed by a predetermined time. Various methods are available to delay the TAU procedure by the predetermined time. It is assumed in the embodiment of the present disclosure that the TAU procedure is delayed by the predetermined time using a timer, for example.

Now, a description will be given of an operation of a UE for controlling a TAU request using a timer in a mobile communication system according to an embodiment of the present disclosure.

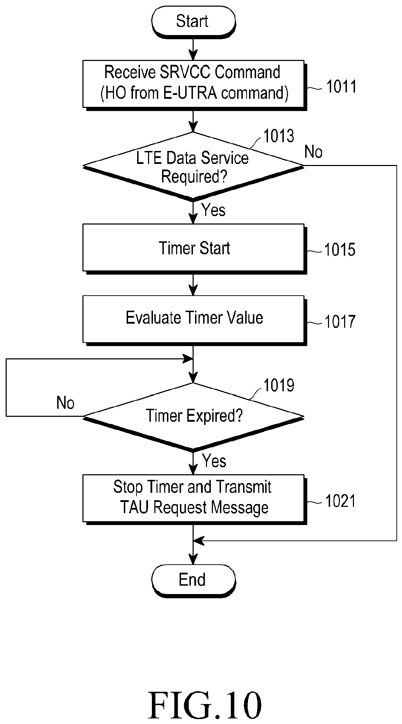

FIG. 10 is a flowchart illustrating an operation of a UE for controlling a TAU request using a timer in a mobile communication system according to an embodiment of the present disclosure.

Referring to FIG. 10, the UE receives a message including an HO command, for example, a Mobility from EUTRA Command indicating HO to a legacy network, for a SRVCC procedure from an LTE network (eNB) in operation 1011. In operation 1013, the UE determines whether there is a need for receiving data service from the LTE network simultaneously with receiving a service from the legacy network by the SRVCC procedure. If there is a need for receiving the data service from the LTE network simultaneously with receiving the service from the legacy network by the SRVCC procedure, the UE goes to operation 1015.

In operation 1015, the UE starts a predetermined timer and goes to operation 1017. The timer is used to determine a time to transmit a TAU request message during the SRVCC procedure. The time to start the timer may be changed according to a system situation of the mobile communication system and the time to start the timer may be determined based on various parameters. Herein, the parameters used to determine the time to start the timer will not be described in detail herein.

The UE continuously evaluates the timer in operation 1017 and goes to operation 1019.

The UE checks whether the timer has expired in operation 1019. Upon expiration of the timer, the UE goes to operation 1021. If the timer is still running, the UE repeats the check operation of operation 1019. Expiration of the timer may mean that the value of the timer is equal to or larger than a predetermined value.

In operation 1021, the UE stops the timer and performs an operation for continuously receiving the data service from the LTE network, that is, a TAU procedure. More specifically, the UE generates a TAU request message and transmits the TAU request message to an MME. If an RRC connection has already been released, the UE may first perform an RRC connection establishment procedure to transmit the TAU request message.

While FIG. 10 illustrates an operation of a UE for controlling a TAU request based on a timer in a mobile communication system according to an embodiment of the present disclosure, many modifications can be made to FIG. 10. For example, while the operations are sequential in FIG. 10, they may be overlapped or may be performed in parallel, in a different order, or a plurality of times.

Now, a detailed description will be given of the second method.

In the second method, only when a UE confirms that an RRC connection has been released from an LTE network, the UE performs a TAU procedure to receive data service from the LTE network. This is because only when an MME receives an SRVCC PS to CS Completion Notification message from an MSC, the MME performs an S1 (or UE Context) release procedure and an eNB releases an RRC connection to the UE during this procedure.

Accordingly, if the UE reestablishes an RRC connection and transmits a TAU message after confirming release of the RRC connection, the UE may prevent the MME from transmitting an SRVCC PS to CS Cancel Notification message to the MSC.

Now, a description will be given of an operation of a UE for controlling transmission of a TAU request message according to an RRC connection state in a mobile communication system according to an embodiment of the present disclosure.

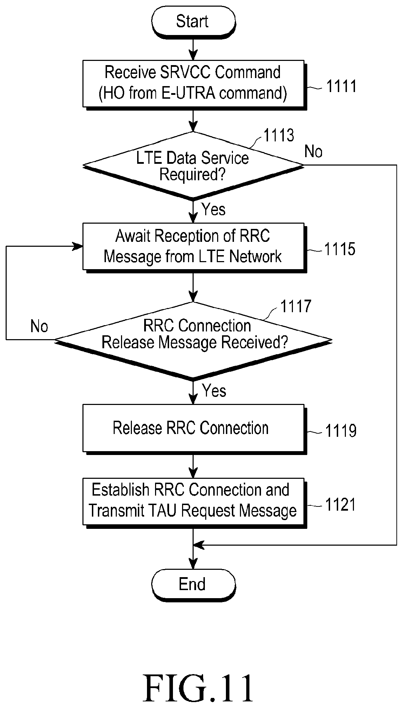

FIG. 11 is a flowchart illustrating an operation of a UE for controlling transmission of a TAU request message according to an RRC connection state in a mobile communication system according to an embodiment of the present disclosure.

Referring to FIG. 11, the UE receives a message including an HO command, for example, a Mobility from EUTRA Command indicating HO to a legacy network, for an SRVCC procedure from an eNB in operation 1111 and goes to operation 1113.

In operation 1113, the UE determines whether there is a need for receiving data service from the LTE network simultaneously with receiving a service from the legacy network by the SRVCC procedure. If there is a need for receiving the data service from the LTE network simultaneously with receiving the service from the legacy network by the SRVCC procedure, the UE goes to operation 1115.

In operation 1115, the UE awaits reception of an RRC message from the LTE network and goes to operation 1117.

The UE determines whether an RRC connection release message has been received from the LTE network in operation 1117. Upon receipt of the RRC connection release message, the UE proceeds to operation 1119.

The UE performs an RRC connection release operation according to the RRC connection release message in operation 1119 and goes to operation 1121.

In operation 1121, the UE performs an operation for continuously receiving the data service from the LTE network, that is, a TAU procedure. Since an RRC connection has already been released by the RRC connection release operation in operation 1119, the UE may first perform an RRC connection establishment procedure to transmit the TAU request message.

While FIG. 11 illustrates an operation of a UE for controlling transmission of a TAU request message according to an RRC connection state in a mobile communication system according to an embodiment of the present disclosure, many modifications can be made to FIG. 11. For example, while the operations are sequential in FIG. 11, they may be overlapped or may be performed in parallel, in a different order, or a plurality of times.

The third method will be described below in detail.

In the third method, after a UE transmits an RRC connection reestablishment request message to an LTE network, the UE selects an operation according to a response from the LTE network.

If RRC connection reestablishment is successful, this means that an MME and an eNB have not performed a UE context release procedure. Therefore, the UE transmits a TAU request message after explicitly receiving an RRC connection release command from the eNB.

On the contrary, if the RRC connection reestablishment is failed, this means that the MME and the eNB have already released a UE context and an RRC connection. Therefore, the UE may transmit a TAU request message immediately. This is because only when the MME receives an SRVCC PS to CS Complete Notification message from an MSC, the MME performs an S1 (or UE Context) release procedure with the eNB and the eNB releases an RRC connection to the UE during the S1 (or UE Context) release procedure.

Accordingly, if the UE reestablishes an RRC connection and transmits a TAU request message after checking an RRC connection state of the LTE network by explicitly transmitting the RRC reestablishment request message, the UE may prevent the MME from transmitting an SRVCC PS to CS Cancel Notification message to the MSC.

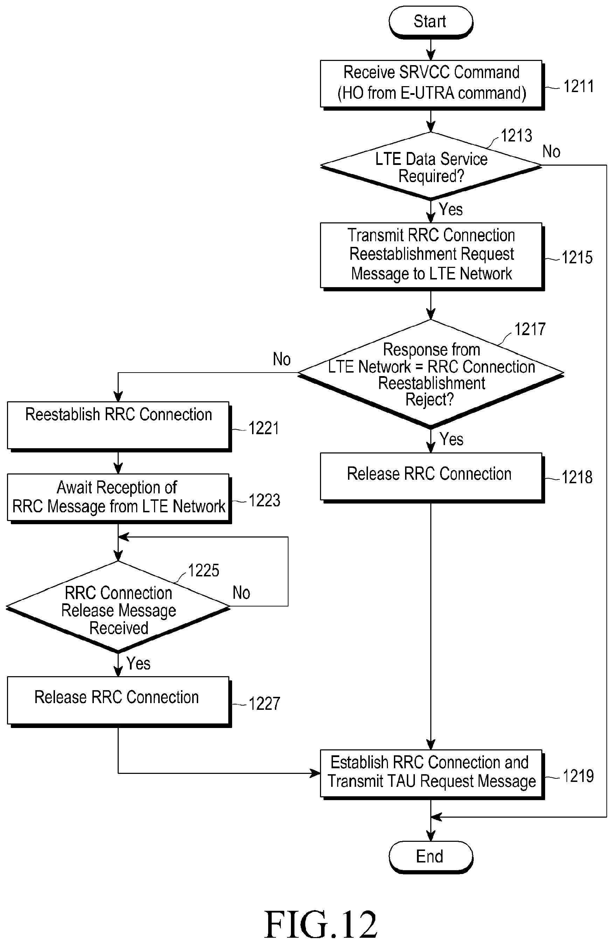

With reference to FIG. 12, a description will be given of an operation of a UE for performing an RRC connection reestablishment procedure and controlling transmission of a TAU request message according to a result of the RRC connection reestablishment procedure in a mobile communication system according to an embodiment of the present disclosure.

FIG. 12 is a flowchart illustrating an operation of a UE for performing an RRC connection reestablishment procedure and controlling transmission of a TAU request message according to a result of the RRC connection reestablishment procedure in a mobile communication system according to an embodiment of the present disclosure.

Referring to FIG. 12, the UE receives a message including an HO command, for example, a Mobility from EUTRA Command indicating HO to a legacy network, for an SRVCC procedure from an eNB in operation 1211 and goes to operation 1213.

In operation 1213, the UE determines whether there is a need for receiving data service from the LTE network simultaneously with receiving a service from the legacy network by the SRVCC procedure. If there is a need for receiving the data service from the LTE network simultaneously with receiving the service from the legacy network by the SRVCC procedure, the UE goes to operation 1215.

In operation 1215, the UE transmits an RRC connection reestablishment request message to the LTE network and goes to operation 1217.

The UE receives an RRC message from the LTE network and determines whether the received RRC message is an RRC connection reestablishment reject message in operation 1217. If the received RRC message is an RRC connection reestablishment reject message, the UE proceeds to operation 1218. On the contrary, if the received RRC message is not an RRC connection reestablishment reject message but an RRC connection reestablishment message, the UE goes to operation 1221.

Since the UE has received the RRC connection reestablishment rejection message, the UE releases an RRC connection in operation 1218 and proceeds to operation 1219.

Since the UE has received the RRC connection reestablishment message, the UE performs an RRC connection reestablishment procedure in operation 1221 and goes to operation 1223.

The UE awaits reception of an RRC command from the LTE network in operation 1223 and determines whether an RRC connection release message has been received from the LTE network in operation 1225. Upon receipt of the RRC connection release message, the UE goes to operation 1227.

The UE performs the RRC connection release procedure in operation 1227 and goes to operation 1219.

In operation 1219, the UE performs an operation for continuously receiving the data service from the LTE network, that is, a TAU procedure. Since the RRC connection has already been released in operations 1218 and 1227, the UE may first perform the RRC connection establishment procedure to transmit the TAU request message.

While FIG. 12 illustrates an operation of a UE for performing an RRC connection reestablishment procedure and controlling transmission of a TAU request message according to a result of the RRC connection reestablishment procedure in a mobile communication system according to an embodiment of the present disclosure, many modifications can be made to FIG. 12. For example, while the operations are sequential in FIG. 12, they may be overlapped or may be performed in parallel, in a different order, or a plurality of times.

While the first, second, and third methods may be performed separately to avoid the afore-described situation as described above, they may be performed in combination. For example, before transmitting the RRC connection reestablishment request message in operation 1215, the UE may determine whether to perform the RRC connection release procedure by performing operations 1115 and 1117.

Or before transmitting the RRC connection reestablishment request message in operation 1215, the UE may perform operations 1015, 1017, and 1019 and determines whether the RRC connection release message has been received by performing operations 1115 and 1117. Then the UE may perform the operations of operation 1215 and the subsequent operations only when the RRC connection release message has not been received until expiration of the timer.

The operation of a UE for performing an RRC connection reestablishment procedure and controlling transmission of a TAU request message according to a result of the RRC connection reestablishment procedure in the mobile communication system according to the embodiment of the present disclosure has been described with reference to FIG. 12. Now a description will be given of the internal structure of an LTE PS legacy CS UE in a mobile communication system according to an embodiment of the present disclosure.

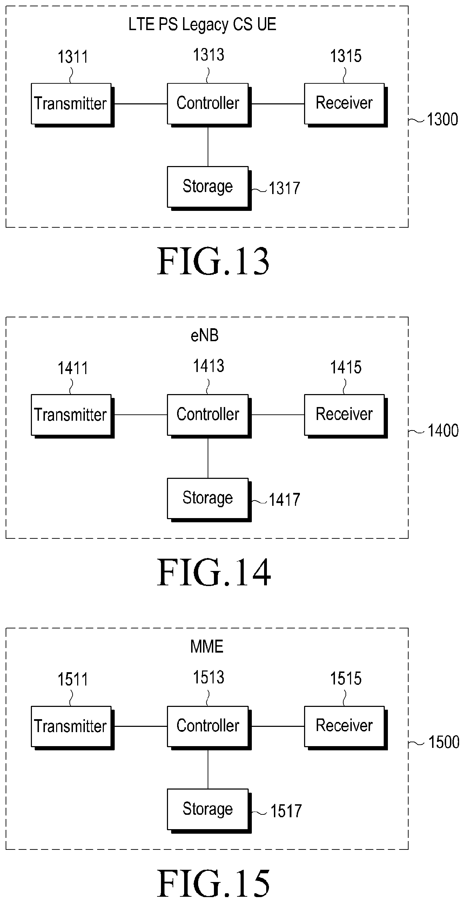

FIG. 13 is a block diagram of an LTE PS legacy CS UE in a mobile communication system according to an embodiment of the present disclosure.

Referring to FIG. 13, an LTE PS legacy CS UE 1300 includes a transmitter 1311, a controller 1313, a receiver 1315, and a storage 1317.

The controller 1313 provides overall control to the LTE PS legacy CS UE 1300. Particularly, the controller 131 controls the LTE PS legacy CS UE 1300 to perform operations for providing voice service and data service. The operations for providing voice service and data service performed by the LTE PS legacy CS UE 1300 have been described before with reference to FIGS. 2 to 12 and thus will not be described in detail herein to avoid redundancy.

The transmitter 1311 transmits various signals and messages to other entities under the control of the controller 1313. The transmitter 1311 may include a Radio Frequency (RF) transmitter for upconverting the frequency of a transmission signal and amplifying the upconverted transmission signal. The transmitter 1311 may transmit a signal output from the controller 1313 on a radio channel.

The receiver 1315 receives various signals and messages from other entities under the control of the controller 1313. The receiver 1315 may include an RF receiver for low-noise-amplifying a received signal and downconverting the frequency of the low-noise-amplified received signal. The receiver 1315 outputs a signal received on a radio channel to the controller 1313.

The storage 1317 stores programs and data required to perform the operations for providing voice service and data service described before with reference to FIGS. 2 and 12 and data generated during the operations for providing voice service and data service described before with reference to FIGS. 2 and 12.

While the transmitter 1311, the controller 1313, the receiver 1315, and the storage 1317 are shown in FIG. 13 as separately configured in the LTE PS legacy CS UE 1300 by way of example, it is to be clearly understood that at least one of the transmitter 1311, the controller 1313, the receiver 1315, and the storage 1317 may be incorporated with another component in the LTE PS legacy CS UE 1300.

The LTE PS legacy CS UE 1300 may include an LTE transmitter, an LTE controller, an LTE receiver, a legacy transmitter, a legacy controller, and a legacy receiver, and may include an integrated controller for controlling the LTE controller and the legacy controller in an integrated manner. For example, if the LTE PS legacy CS UE 1300 operates in LTE PS legacy CS mode, the integrated controller may command the LTE controller to perform a TAU procedure and at the same time, may command the legacy controller to perform a CS attach procedure or a TAU procedure. If the LTE PS legacy CS UE 1300 is connected to a CSFB-available network, the integrated controller may command the legacy controller to turn off the legacy transmitter and the legacy receiver.

The internal structure of an LTE PS legacy CS UE in a mobile communication system according to the embodiment of the present disclosure has been described above with reference to FIG. 13. With reference to FIG. 14, the internal structure of an eNB in a mobile communication system according to the embodiment of the present disclosure will be described below.

FIG. 14 is a block diagram of an eNB in a mobile communication system according to the embodiment of the present disclosure.

Referring to FIG. 14, an eNB 1400 includes a transmitter 1411, a controller 1413, a receiver 1415, and a storage 1417.

The controller 1413 provides overall control to the eNB 1400. Particularly, the controller 1413 controls the eNB 14000 to perform operations for providing voice service and data service. The operations for providing voice service and data service performed by the eNB 1400 have been described before with reference to FIGS. 2 to 12 and thus will not be described in detail herein to avoid redundancy.

The transmitter 1411 transmits various signals and messages to other entities under the control of the controller 1413.

The receiver 1415 receives various signals and messages from other entities under the control of the controller 1413.

The storage 1417 stores programs and data required to perform the operations for providing voice service and data service described before with reference to FIGS. 2 and 12 and data generated during the operations for providing voice service and data service described before with reference to FIGS. 2 and 12.

While the transmitter 1411, the controller 1413, the receiver 1415, and the storage 1417 are shown in FIG. 14 as separately configured in the eNB 1400 by way of example, it is to be clearly understood that at least one of the transmitter 1411, the controller 1413, the receiver 1415, and the storage 1417 may be incorporated with another component in the eNB 1400.

The internal structure of an eNB in a mobile communication system according to the embodiment of the present disclosure has been described above with reference to FIG. 14. With reference to FIG. 15, the internal structure of an MME in a mobile communication system according to the embodiment of the present disclosure will be described below.

FIG. 15 is a block diagram of an MME in a mobile communication system according to the embodiment of the present disclosure.

Referring to FIG. 15, an MME 1500 includes a transmitter 1511, a controller 1513, a receiver 1515, and a storage 1517.

The controller 1513 provides overall control to the MME 1500. Particularly, the controller 1513 controls the MME 1500 to perform operations for providing voice service and data service. The operations for providing voice service and data service performed by the MME 1500 have been described before with reference to FIGS. 2 to 12 and thus will not be described in detail herein to avoid redundancy. The controller 1513 may control the MME 1500 to generate CS security-related information at a time when a CSFB procedure is triggered from the LTE PS legacy CS UE and thus an expanded service request message is received from the LTE PS legacy CS UE.

The transmitter 1511 transmits various signals and messages to other entities under the control of the controller 1513. The transmitter 1511 may include an interface unit for executing a signal processing function for wired communication.

The receiver 1515 receives various signals and messages from other entities under the control of the controller 1513.

The storage 1517 stores programs and data required for the MME 1500 to perform the operations for providing voice service and data service described before with reference to FIGS. 2 and 12 and data generated during the operations for providing voice service and data service described before with reference to FIGS. 2 and 12.

While the transmitter 1511, the controller 1513, the receiver 1515, and the storage 1517 are shown in FIG. 15 as separately configured in the MME 1500 by way of example, it is to be clearly understood that at least one of the transmitter 1511, the controller 1513, the receiver 1515, and the storage 1517 may be incorporated with another component in the MME 1500.

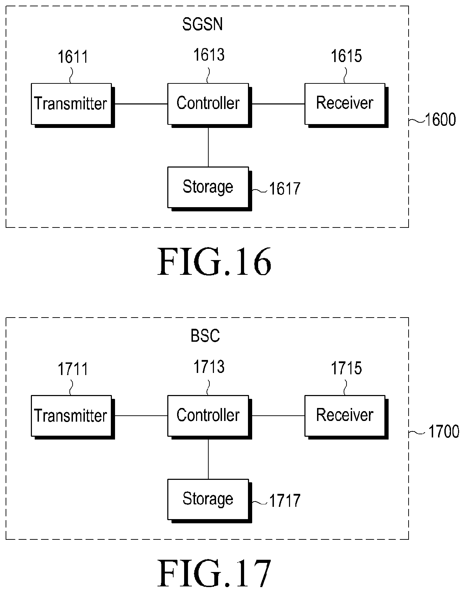

The internal structure of an MME in a mobile communication system according to the embodiment of the present disclosure has been described above with reference to FIG. 15. With reference to FIG. 16, the internal structure of an SGSN in a mobile communication system according to the embodiment of the present disclosure will be described below.

FIG. 16 is a block diagram of an SGSN in a mobile communication system according to the embodiment of the present disclosure.

Referring to FIG. 16, an SGSN 1600 includes a transmitter 1611, a controller 1613, a receiver 1615, and a storage 1617.

The controller 1613 provides overall control to the SGSN 1600. Particularly, the controller 1613 controls the SGSN 1600 to perform operations for providing voice service and data service. The operations for providing voice service and data service performed by the SGSN 1600 have been described before with reference to FIGS. 2 to 12 and thus will not be described in detail herein to avoid redundancy.

The transmitter 1611 transmits various signals and messages to other entities under the control of the controller 1613.

The receiver 1615 receives various signals and messages from other entities under the control of the controller 1613.

The storage 1617 stores programs and data required for the SGSN 1600 to perform the operations for providing voice service and data service described before with reference to FIGS. 2 and 12 and data generated during the operations for providing voice service and data service described before with reference to FIGS. 2 and 12.

While the transmitter 1611, the controller 1613, the receiver 1515, and the storage 1617 are shown in FIG. 16 as separately configured in the SGSN 1600 by way of example, it is to be clearly understood that at least one of the transmitter 1611, the controller 1613, the receiver 1615, and the storage 1617 may be incorporated with another component in the SGSN 1600.

The internal structure of an SGSN in a mobile communication system according to the embodiment of the present disclosure has been described above with reference to FIG. 16. With reference to FIG. 17, the internal structure of a BSC in a mobile communication system according to the embodiment of the present disclosure will be described below.

FIG. 17 is a block diagram of a BSC in a mobile communication system according to the embodiment of the present disclosure.

Referring to FIG. 17, a BSC 1700 includes a transmitter 1711, a controller 1713, a receiver 1715, and a storage 1717.

The controller 1713 provides overall control to the BSC 1700. Particularly, the controller 1713 controls the BSC 1700 to perform operations for providing voice service and data service. The operations for providing voice service and data service performed by the BSC 1700 have been described before with reference to FIGS. 2 to 12 and thus will not be described in detail herein to avoid redundancy.

The transmitter 1711 transmits various signals and messages to other entities under the control of the controller 1613.

The receiver 1715 receives various signals and messages from other entities under the control of the controller 1613.

The storage 1717 stores programs and data required for the BSC 1700 to perform the operations for providing voice service and data service described before with reference to FIGS. 2 and 12 and data generated during the operations for providing voice service and data service described before with reference to FIGS. 2 and 12.

While the transmitter 1711, the controller 1713, the receiver 1715, and the storage 1717 are shown in FIG. 17 as separately configured in the BSC 1700 by way of example, it is to be clearly understood that at least one of the transmitter 1711, the controller 1713, the receiver 1715, and the storage 1717 may be incorporated with another component in the BSC 1700.

As is apparent from the foregoing description, an embodiment of the present disclosure enables service reception by adaptive selection of an access network through which voice service and data service will be received in a mobile communication system.

An embodiment of the present disclosure enables service provisioning by differentiating an access network through which a UE will receive voice service from an access network through which the UE will receive data service in a mobile communication system.

Since a service can be provided by adaptive selection of an access network through which voice service and data service are received or a UE can receive a service by differentiating an access network through which voice service will be received from an access network through which data service will be received, service quality can be increased.

Further, since a UE can receive data service continuously from an LTE network even after switching to a 2G/3G network due to an SRVCC procedure according to an embodiment of the present disclosure, the quality of service provided to the UE can be increased.

The present disclosure may be implemented as computer-readable code that can be written on a computer-readable recording medium. The computer-readable recording medium may be any type of recording device in which data is stored in a computer-readable manner. Examples of the computer-readable recording medium include a Read Only Memory (ROM), a Random Access Memory (RAM), a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A user equipment, UE, (1300) for providing a service in a mobile communication system, the UE (1300) comprising:
a transceiver configured to transmit and receive messages with a first network and a second network; and
a controller (1313) coupled with the transceiver and configured to:
control the transceiver to perform (311) a combined attach procedure associated with a first network and
a second network upon detection of entry into an area of the first network,
control the transceiver to receive (313) an attach accept message including at least one parameter from the first network,
determine (315) whether the first network supports either of a voice over internet
protocol multimedia subsystem, VoIMS, scheme and a CSFB scheme based on the at least one parameter, and in case that the first network does not support either of the VoIMS scheme and the CSFB scheme:
control the transceiver to transmit (317), to the first network,
a tracking area update, TAU, request message including information indicating that
the UE (1300) does not have the capability to support a 2nd generation, 2G, or 3rd generation, 3G, network, while
performing a normal tracking area update procedure, and
control the transceiver to perform (319) a circuit switched, CS, registration procedure with the second network, the CS registration procedure including an attachment procedure;
wherein the first network is a non-legacy network and the second network is a 2nd generation, 2G, or 3rd generation, 3G, network.

2. The UE (1300) of claim 1, wherein the first network includes a long term evolution, LTE, network.

3. The UE (1300) of claim 1, wherein the at least one parameter includes at least one of a capability to support the VoIMS scheme and an attach result, and
wherein the controller (1313) is further configured to determine that the first network does not support the CSFB scheme if the attach result is evolved packet system, EPS, only indicating that the CSFB scheme is not supported.

4. A user equipment, UE, (1300) for providing a service in a mobile communication system, the UE (1300) comprising:
a transceiver configured to transmit and receive messages with a first network and a second network; and
a controller (1313) coupled with the transceiver and configured to:
control the transceiver to perform a combined attach procedure associated with a first
network and a second network upon detection of entry into an area of the first network,
control the transceiver to receive (913) an attach accept message including at least one parameter from the first network,
determine (915) whether the first network supports a voice over internet
protocol multimedia subsystem, VoIMS, scheme or a CSFB scheme based on
the at least one parameter, and
in case that the first network does not support either of the VoIMS scheme and the
CSFB scheme and the usage setting is voice-centric:
determine (919) whether a type of the second network adjacent to or coexistent with the first network is a 2nd generation, 2G, network or a 3rd generation, 3G, network, and
if the type of the second network is the 2G network:
control the transceiver to transmit (925) a tracking area update, TAU, request message to the first network, the TAU request message including information indicating that the usage setting of the UE (1300) is data centric and including information indicating that the UE (1300) does not have the capability to support a 2G or 3G network; and
perform (923) a circuit switched, CS, registration procedure with the second network to receive a CS service, the CS registration procedure including an attachment procedure;
wherein the second network is a legacy network providing a CS service, and wherein the first network is a non-legacy network.

5. The UE (1300) of claim 4, wherein the first network includes a long term evolution, LTE, network.

6. The UE (1300) of claim 5, wherein if the type of the second network is the 3G network, the controller (1313) is further configured to:
control the transceiver to transmit (921) a TAU request message including information indicating that the usage setting of the UE (1300) is data centric to the first network, the TAU request message information indicating that the UE (1300) supports a 2G or 3G network; and
perform (923) a CS registration procedure with the second network to receive the CS service, the CS registration procedure including the attachment procedure.

7. The UE (1300) of claim 4, wherein the at least one parameter includes at least one of a capability supporting the VoIMS scheme and an attach result, and
wherein the controller (1313) is further configured to determine that the first network does not support the CSFB scheme if the attach result is evolved packet system, EPS, only indicating that the CSFB scheme is not supported.

8. A method for providing a service at a user equipment, UE, (1300) in a mobile communication system, the method being executed by the UE and
comprising:
performing (311) a combined attach procedure associated with a first network and a second network upon detection of entry into an area of the first network,
receiving (313) an attach accept message including at least one parameter from the first network,
determining (315) whether the first network supports either of a voice over internet protocol multimedia subsystem, VoIMS, scheme and a the CSFB scheme based on the at least one parameter, and in case that the first network does not support either of the VoIMS scheme and the CSFB scheme: transmitting (317), to the first network, a tracking area update, TAU, request message including information indicating that the
UE (1300) does not have the capability to support a 2nd generation, 2G, or 3rd generation, 3G, network, while performing a normal tracking area update procedure, and
performing (319) a circuit switched, CS, registration procedure with the second network, the CS registration procedure including an attachment procedure;
wherein the first network is a non-legacy network and the second network is a 2nd generation, 2G, or 3rd generation, 3G, network.

9. A method for providing a service at a user equipment, UE, (1300) in a mobile communication system, the method being executed by the UE and comprising:
performing (911) a combined attach procedure associated with a first network and a second network upon detection of entry into an area of the first network,
receiving (913) an attach accept message including at least one parameter from the first network,
determining (915) whether the first network supports a voice over internet protocol multimedia subsystem, VoIMS, scheme or a
CSFB scheme based on the at least one parameter, and
in case that the first network does not support either of the VoIMS scheme and the CSFB
scheme and the usage setting is voice-centric:
determining (919) whether a type of the second network adjacent to or coexistent with the first network is a 2nd generation, 2G, network or a 3rd generation, 3G, network, and
if the type of the second network is the 2G network:
transmitting (925) a tracking area update, TAU, request message to the first network, the TAU request message including information indicating that the usage setting of the UE (1300) is data centric and including information indicating that the UE (1300) does not have the capability to support a 2G or 3G network; and
performing (923) a circuit switched, CS, registration procedure with the second network to receive a CS service, the CS registration
procedure including an attachment procedure;
wherein the second network is a legacy network providing a CS service and wherein the first network is a non-legacy network.

## Patentansprüche

1. Benutzergerät, UE, (1300) zum Bereitstellen eines Dienstes in einem mobilen Kommunikationssystem, das UE (1300) umfassend:
einen Sendeempfänger, der konfiguriert ist, um Nachrichten mit einem ersten Netzwerk und einem zweiten Netzwerk zu senden und zu empfangen; und
eine Steuerung (1313), die mit dem Sendeempfänger gekoppelt und zu Folgendem konfiguriert ist:
Steuern des Sendeempfängers, um bei Erfassen eines Eintritts in einen Bereich des ersten Netzwerks einen kombinierten Anbindungsvorgang auszuführen (311), der mit einem ersten Netzwerk und einem zweiten Netzwerk assoziiert ist,
Steuern des Sendeempfängers, um eine Anbindungsannahme-Nachricht zu empfangen (313), die mindestens einen Parameter von dem ersten Netzwerk beinhaltet, Bestimmen (315), ob das erste Netzwerk eines von einem Voice-over-Internet-Protocol-Multimedia-Subsystem-Schema, VoIMS-Schema, und einem CSFB-Schema unterstützt, basierend auf dem mindestens einen Parameter, und
für den Fall, dass das erste Netzwerk weder das VoIMS-Schema noch das CSFB-Schema unterstützt:
Steuern des Sendeempfängers zum Senden (317), an das erste Netzwerk, einer Tracking-Bereich-Aktualisierungsnachricht, TAU-Nachricht, die Informationen beinhaltet, die angeben, dass das UE (1300) nicht die Fähigkeit hat, ein Netzwerk der 2. Generation, 2G, oder 3. Generation, 3G, zu unterstützen, während es eine normalen Tracking-Bereich-Aktualisierungsvorgang ausführt, und
Steuern des Sendeempfängers, um einen leitungsvermittelten, CS, Registrierungsvorgang mit dem zweiten Netzwerk auszuführen (319), wobei der CS-Registrierungsvorgang einen Anbindungsvorgang beinhaltet;
wobei das erste Netzwerk ein Nicht-Legacy-Netzwerk und das zweite Netzwerk ein Netzwerk der 2. Generation, 2G, oder 3. Generation, 3G, ist.

2. UE (1300) nach Anspruch 1, wobei das erste Netzwerk ein Long-Term-Evolution-Netzwerk, LTE-Netzwerk, beinhaltet.

3. UE (1300) nach Anspruch 1, wobei der mindestens eine Parameter mindestens eines von einer Fähigkeit zum Unterstützen des VoIMS-Schemas und einem Anbindungsresultat beinhaltet, und
wobei der Steuerung (1313) ferner konfiguriert ist, um zu bestimmen, dass das erste Netzwerk das CSFB-Schema nicht unterstützt, wenn das Anbindungsresultat Evolved Packet System, EPS, ist, was nur angibt, dass das CSFB-Schema nicht unterstützt wird.

4. Benutzergerät, UE, (1300) zum Bereitstellen eines Dienstes in einem mobilen Kommunikationssystem, das UE (1300) umfassend:
einen Sendeempfänger, der konfiguriert ist, um Nachrichten mit einem ersten Netzwerk und einem zweiten Netzwerk zu senden und zu empfangen; und
eine Steuerung (1313), die mit dem Sendeempfänger gekoppelt und zu Folgendem konfiguriert ist:
Steuern des Sendeempfängers, um bei Erfassen eines Eintritts in einen Bereich des ersten Netzwerks einen kombinierten Anbindungsvorgang auszuführen, der mit einem ersten Netzwerk und einem zweiten Netzwerk assoziiert ist,
Steuern des Sendeempfängers, um eine Anbindungsannahme-Nachricht zu empfangen (913), die mindestens einen Parameter von dem ersten Netzwerk beinhaltet,
Bestimmen (915), ob das erste Netzwerk ein Voice-over-Internet-Protocol-Multimedia-Subsystem-Schema, VoIMS-Schema, oder ein CSFB-Schema unterstützt, basierend auf dem mindestens einen Parameter, und
für den Fall, dass das erste Netzwerk weder das VoIMS-Schema noch das CSFB-Schema unterstützt und die Nutzungseinstellung sprachzentriert ist:
Bestimmen (919), ob ein Typ des zweiten Netzwerks, das an das erste Netzwerk angrenzt oder mit diesem koexistiert, ein Netzwerk der 2. Generation, 2G, oder ein Netzwerk der 3. Generation, 3G, ist, und
wenn der Typ des zweiten Netzwerks das 2G-Netzwerk ist:
Steuern des Sendeempfängers, um eine Tracking-Bereich-Aktualisierung-Anforderungsnachricht, TAU-Anforderungsnachricht, an das erste Netzwerk zu senden (925), wobei die TAU-Anforderungsnachricht Informationen beinhaltet, die angeben, dass die Nutzungseinstellung des UE (1300) datenzentriert ist, und Informationen beinhaltet, die angeben, dass das UE (1300) nicht die Fähigkeit hat, ein 2G- oder 3G-Netzwerk zu unterstützen; und
Ausführen (923) eines leitungsvermittelten, CS, Registrierungsvorgangs mit dem zweiten Netzwerk, um einen CS-Dienst zu empfangen, wobei der CS-Registrierungsvorgang einen Anbindungsvorgang beinhaltet;
wobei das zweite Netzwerk ein Legacy-Netzwerk ist, das einen CS-Dienst bereitstellt, und wobei das erste Netzwerk ein Nicht-Legacy-Netzwerk ist.

5. UE (1300) nach Anspruch 4, wobei das erste Netzwerk ein Long-Term-Evolution-Netzwerk, LTE-Netzwerk, beinhaltet.

6. UE (1300) nach Anspruch 5, wobei, wenn der Typ des zweiten Netzwerks das 3G-Netzwerk ist, die Steuerung (1313) ferner zu Folgendem konfiguriert ist:
Steuern des Sendeempfängers zum Senden (921) einer TAU-Anforderungsnachricht, die Informationen beinhaltet, die angeben, dass die Nutzungseinstellung des UE (1300) datenzentriert ist, an das erste Netz, wobei die Informationen der TAU-Anforderungsnachricht angeben, dass das UE (1300) ein 2G- oder 3G-Netzwerk unterstützt; und
Ausführen (923) eines CS-Registrierungsvorgangs mit dem zweiten Netzwerk, um den CS-Dienst zu empfangen, wobei der CS-Registrierungsvorgang den Anbindungsvorgang beinhaltet.

7. UE (1300) nach Anspruch 4, wobei der mindestens eine Parameter mindestens eines von einer Fähigkeit zum Unterstützen des VoIMS-Schemas und einem Anbindungsresultat beinhaltet, und
wobei der Steuerung (1313) ferner konfiguriert ist, um zu bestimmen, dass das erste Netzwerk das CSFB-Schema nicht unterstützt, wenn das Anbindungsresultat Evolved Packet System, EPS, ist, was nur angibt, dass das CSFB-Schema nicht unterstützt wird.

8. Verfahren zum Bereitstellen eines Dienstes an ein Benutzergerät, UE, (1300) in einem mobilen Kommunikationssystem, wobei das Verfahren von dem UE ausgeführt wird und umfassend:
bei Erfassen eines Eintritts in einen Bereich des ersten Netzwerks, Ausführen (311) eines kombinierten Anbindungsvorgangs, der mit einem ersten Netzwerk und einem zweiten Netzwerk assoziiert ist,
Empfangen (313) einer Anbindungsannahme-Nachricht, die mindestens einen Parameter von dem ersten Netzwerk beinhaltet,
Bestimmen (315), ob das erste Netzwerk eines von einem Voice-over-Internet-Protocol-Multimedia-Subsystem-Schema, VoIMS-Schema, und einem dem CSFB-Schema unterstützt, basierend auf dem mindestens einen Parameter, und
für den Fall, dass das erste Netzwerk weder das VoIMS-Schema noch das CSFB-Schema unterstützt:
Senden (317), an das erste Netzwerk, einer Tracking-Bereich-Aktualisierungsnachricht, TAU-Nachricht, die Informationen beinhaltet, die angeben, dass das UE (1300) nicht die Fähigkeit hat, ein Netzwerk der 2. Generation, 2G, oder 3. Generation, 3G, zu unterstützen, während es eine normalen Tracking-Bereich-Aktualisierungsvorgang ausführt, und
Ausführen (319) eines leitungsvermittelten, CS, Registrierungsvorgangs mit dem zweiten Netzwerk, wobei der CS-Registrierungsvorgang einen Anbindungsvorgang beinhaltet;
wobei das erste Netzwerk ein Nicht-Legacy-Netzwerk und das zweite Netzwerk ein Netzwerk der 2. Generation, 2G, oder 3. Generation, 3G, ist.

9. Verfahren zum Bereitstellen eines Dienstes an ein Benutzergerät, UE, (1300) in einem mobilen Kommunikationssystem, wobei das Verfahren von dem UE ausgeführt wird und umfassend:
bei Erfassen eines Eintritts in einen Bereich des ersten Netzwerks, Ausführen (911) eines kombinierten Anbindungsvorgangs, der mit einem ersten Netzwerk und einem zweiten Netzwerk assoziiert ist,
Empfangen (913) einer Anbindungsannahme-Nachricht, die mindestens einen Parameter von dem ersten Netzwerk beinhaltet,
Bestimmen (915), ob das erste Netzwerk ein Voice-over-Internet-Protocol-Multimedia-Subsystem-Schema, VoIMS-Schema, und ein CSFB-Schema unterstützt, basierend auf dem mindestens einen Parameter, und
für den Fall, dass das erste Netzwerk weder das VoIMS-Schema noch das CSFB-Schema unterstützt und die Nutzungseinstellung sprachzentriert ist:
Bestimmen (919), ob ein Typ des zweiten Netzwerks, das an das erste Netzwerk angrenzt oder mit diesem koexistiert, ein Netzwerk der 2. Generation, 2G, oder ein Netzwerk der 3. Generation, 3G, ist, und
wenn der Typ des zweiten Netzwerks das 2G-Netzwerk ist:
Senden (925) einer Tracking-Bereich-Aktualisierung-Anforderungsnachricht, TAU-Anforderungsnachricht, an das erste Netzwerk, wobei die TAU-Anforderungsnachricht Informationen beinhaltet, die angeben, dass die Nutzungseinstellung des UE (1300) datenzentriert ist, und Informationen beinhaltet, die angeben, dass das UE (1300) nicht die Fähigkeit hat, ein 2G- oder 3G-Netzwerk zu unterstützen; und
Ausführen (923) eines leitungsvermittelten, CS, Registrierungsvorgangs mit dem zweiten Netzwerk, um einen CS-Dienst zu empfangen, wobei der CS-Registrierungsvorgang einen Anbindungsvorgang beinhaltet; wobei das zweite Netzwerk ein Legacy-Netzwerk ist, das einen CS-Dienst bereitstellt, und wobei das erste Netzwerk ein Nicht-Legacy-Netzwerk ist.

## Revendications

1. Équipement utilisateur, UE, (1300) destiné à fournir un service dans un système de communication mobile, l'UE (1300) comprenant :
un émetteur-récepteur configuré pour émettre et recevoir des messages avec un premier réseau et un second réseau ; et
un dispositif de commande (1313) couplé à l'émetteur-récepteur et configuré pour :
commander à l'émetteur-récepteur de réaliser (311) une procédure de connexion combinée associée à un premier réseau et
un second réseau lors d'une détection d'entrée dans une zone du premier réseau,
commander à l'émetteur-récepteur de recevoir (313) un message d'acceptation de connexion comprenant au moins un paramètre en provenance du premier réseau, déterminer (315) si le premier réseau prend en charge l'un ou l'autre d'un schéma de sous-système multimédia de voix par protocole internet, VoIMS, et d'un schéma CSFB sur la base de l'au moins un paramètre, et
au cas où le premier réseau ne prend en charge ni le schéma VoIMS ni le schéma CSFB :
commander à l'émetteur-récepteur d'émettre (317), vers le premier réseau
un message de demande de mise à jour de zone de suivi, TAU, comprenant des informations indiquant que l'UE (1300) ne possède pas la capacité de prendre en charge un réseau de 2e génération, 2G ou de 3e génération, 3G, tout en réalisant une procédure normale de mise à jour de zone de suivi, et
commander à l'émetteur-récepteur de réaliser (319) une procédure d'enregistrement à commutation de circuits, CS, avec le second réseau, la procédure d'enregistrement CS comprenant une procédure de connexion ;
ledit premier réseau étant un réseau non hérité et ledit second réseau étant un réseau de 2e génération, 2G, ou de 3e génération, 3G.

2. UE (1300) selon la revendication 1, ledit premier réseau comprenant un réseau à évolution à long terme, LTE.

3. UE (1300) selon la revendication 1, ledit au moins un paramètre comprenant au moins l'un d'une capacité à prendre en charge le schéma VoIMS et d'un résultat de connexion, et
ledit dispositif de commande (1313) étant en outre configuré pour déterminer que le premier réseau ne prend pas en charge le schéma CSFB si le résultat de connexion est un système de paquets évolué, EPS, indiquant uniquement que le schéma CSFB n'est pas pris en charge.

4. Équipement utilisateur, UE, (1300) destiné à fournir un service dans un système de communication mobile, l'UE (1300) comprenant :
un émetteur-récepteur configuré pour émettre et recevoir des messages avec un premier réseau et un second réseau ; et
un dispositif de commande (1313) couplé à l'émetteur-récepteur et configuré pour :
commander à l'émetteur-récepteur de réaliser une procédure de connexion combinée associée à un premier
réseau et à un second réseau lors de la détection de l'entrée dans une zone du premier
réseau, commander à l'émetteur-récepteur de recevoir (913) un message d'acceptation de connexion comprenant au moins un paramètre en provenance du premier réseau,
déterminer (915) si le premier réseau prend en charge un schéma de sous-système multimédia de voix par protocole internet, VoIMS, ou un schéma CSFB sur la base de l'au moins un paramètre, et
au cas où le premier réseau ne prend en charge ni le schéma VoIMS ni le schéma CSFB et que le paramètre d'utilisation est centré sur la voix :
déterminer (919) si le type du second réseau adjacent avec le premier réseau, ou coexistant avec celui-ci est un réseau de 2e génération, 2G, ou un réseau de 3e génération, 3G, et
si le type du second réseau est le réseau 2G :
commander à l'émetteur-récepteur d'émettre (925) un message de demande de mise à jour de zone de suivi, TAU, au premier réseau, le message de demande TAU comprenant des informations indiquant que le réglage d'utilisation de l'UE (1300) est centré sur les données et comprenant des informations indiquant que l'UE (1300) n'a pas la capacité de prendre en charge un réseau 2G ou 3G ; et
réaliser (923) une procédure d'enregistrement à commutation de circuits, CS, avec le second réseau pour recevoir un service CS, la procédure d'enregistrement CS comprenant une procédure de connexion ;
ledit second réseau étant un réseau hérité fournissant un service CS, et ledit premier réseau étant un réseau non hérité.

5. UE (1300) selon la revendication 4, ledit premier réseau comprenant un réseau d'évolution à long terme, LTE.

6. UE (1300) selon la revendication 5, si le type du second réseau est le réseau 3G, ledit dispositif de commande (1313) étant en outre configuré pour :
commander à l'émetteur-récepteur d'émettre (921) un message de demande TAU comprenant des informations indiquant que le réglage d'utilisation de l'UE (1300) est centré sur les données du premier réseau, les informations de message de demande TAU indiquant que l'UE (1300) prend en charge un réseau 2G ou 3G ; et
réaliser (923) une procédure d'enregistrement CS avec le second réseau pour recevoir le service CS, la procédure d'enregistrement CS comprenant la procédure de connexion.

7. UE (1300) selon la revendication 4, ledit au moins un paramètre comprenant au moins l'une d'une capacité prenant en charge le schéma VoIMS et un résultat de connexion, et
ledit dispositif de commande (1313) étant en outre configuré pour déterminer que le premier réseau ne prend pas en charge le schéma CSFB si le résultat de connexion est un système de paquets évolué, EPS, indiquant uniquement que le schéma CSFB n'est pas pris en charge.

8. Procédé permettant de fournir un service au niveau d'un équipement utilisateur, UE, (1300) dans un système de communication mobile, le procédé étant exécuté par l'UE et comprenant :
la réalisation (311) d'une procédure de connexion combinée associée à un premier réseau et à un second réseau lors de la détection d'une entrée dans une zone du premier réseau,
la réception (313) d'un message d'acceptation de connexion comprenant au moins un paramètre en provenance du premier réseau,
la détermination (315) pour savoir si le premier réseau prend en charge l'un ou l'autre d'un schéma de sous-système multimédia de voix par protocole Internet, VoIMS, et un schéma CSFB sur la base de l'au moins un paramètre, et
au cas où le premier réseau ne prend en charge ni le schéma VoIMS ni le schéma CSFB :
l'émission (317), vers le premier réseau, d'un message de demande de mise à jour de zone de suivi, TAU, comprenant des informations indiquant que l'UE (1300) ne possède pas la capacité de prendre en charge un réseau de 2e génération, 2G ou de 3e génération, 3G, tout en réalisant une procédure normale de mise à jour de la zone de suivi, et
la réalisation (319) d'une procédure d'enregistrement à commutation de circuits, CS, avec le second réseau, la procédure d'enregistrement CS comprenant une procédure de connexion ;
ledit premier réseau étant un réseau non hérité et ledit second réseau étant un réseau de 2e génération, 2G, ou de 3e génération, 3G.

9. Procédé permettant de fournir un service au niveau d'un équipement utilisateur, UE, (1300) dans un système de communication mobile, le procédé étant exécuté par l'UE et comprenant :
la réalisation (911) d'une procédure de connexion combinée associée à un premier réseau et à un second réseau lors de la détection d'une entrée dans une zone du premier réseau,
la réception (913) d'un message d'acceptation de connexion comprenant au moins un paramètre en provenance du premier réseau,
la détermination (915) pour savoir si le premier réseau prend en charge un schéma de sous-système multimédia de voix par protocole Internet, VoIMS, ou un schéma CSFB sur la base de l'au moins un paramètre, et
au cas où le premier réseau ne prend en charge ni le schéma VoIMS ni le schéma CSFB et que le paramètre d'utilisation est centré sur la voix :
la détermination (919) pour savoir si le type du second réseau adjacent au premier réseau ou coexistant avec celui-ci est un réseau de 2e génération, 2G, ou un réseau de 3e génération, 3G, et
si le type du second réseau est le réseau 2G :
l'émission (925) d'un message de demande de mise à jour de zone de suivi, TAU, vers le premier réseau, le message de demande TAU comprenant des informations indiquant que le réglage d'utilisation de l'UE (1300) est centré sur les données et comprenant des informations indiquant que l'UE (1300) ne possède pas la capacité de prendre en charge un réseau 2G ou 3G ; et
la réalisation (923) d'une procédure d'enregistrement à commutation de circuits, CS, avec le second réseau pour recevoir un service CS, la procédure d'enregistrement CS comprenant une procédure de connexion ; ledit second réseau étant un réseau hérité fournissant un service CS et ledit premier réseau étant un réseau non hérité.
